# EUROPEAN PATENT APPLICATION

(11) **EP 4 703 329 A1**
(43) Date of publication of application: **04.03.2026**
(21) Application number: 24796573.4
(22) Date of filing: 07.03.2024
(51) Int. Cl.: C03B 33/033

(54) **SNAPPING DEVICE**

(30) Priority: 28.04.2023 JP 2023074356
(71) Applicant: BANDO KIKO CO., LTD., Tokushima 770-0871 (JP)
(72) Inventor: BANDO, Kazuaki, Tokushima-shi, Tokushima 770-0871 (JP)
(74) Representative: Ashton, Gareth Mark
(86) International application number: PCT/JP2024/008668
(87) International publication number: WO 2024/224815

(57) **Abstract**

Provided is a bend-breaking device that changes a rolling direction of a bend-breaking cutter wheel in a peripheral area of a glass plate to a planned direction in which a scoring line to be formed next will extend simultaneously with formation of the scoring line in a bend-breaking processing.

A first bend-breaking device and a second bend-breaking device move a bend-breaking jig from a scoring line forming start point 135a near an outer side of an outline cutting line K1 toward an outer peripheral edge 56c of a glass plate 11, form a scoring line K2 extending in a predetermined direction at a scoring line forming location of a peripheral area 56b of the glass plate 11, and move a bend-breaking cutter wheel to a rolling direction change point 135c near an inner side of the outer peripheral edge 56c of the glass plate 11. The bend-breaking jig is caused to travel in parallel with the upper surface 12 of the peripheral area 56b of the glass plate 11 in the planned direction in which the scoring line K2 to be formed next on the upper surface 12 to extend, and the bend-breaking cutter wheel that comes into contact with the upper surface 12 of the peripheral area 56b of the glass plate 11 and is rotatable by 360° in the direction around the cutter holder center axis is caused to rotate in the direction around the cutter holder center axis. While the rolling direction of the bend-breaking cutter wheel is changed to the planned direction in which the scoring line K2 to be formed next will extend, the scoring line K2 extending in the planned direction is formed in the vicinity of the inner side of the outer peripheral edge 56b of the glass plate 11.

## Description

### Technical Field

The present invention relates to a bend-breaking device that forms a scoring line in a peripheral area of a glass plate to be processed, such as a window glass plate of an automobile or a liquid crystal glass plate, and bend-breaks the peripheral area of the glass plate on which the scoring line is formed.

### Background Art

A glass plate processing system has been disclosed that includes a loading conveyor that carries in a glass plate, a cutting processing area located in front of the loading conveyor, a bend-breaking processing area located in front of the cutting processing area, a grinding processing area located in front of the bend-breaking processing area, an unloading conveyor located in front of the grinding processing area, and a conveyance mechanism that conveys the glass plate from the loading conveyor to each processing area (see Patent Literature 1).

The cutting processing area of the glass plate processing system includes a cutting processing table having a first moving mechanism that moves in the width direction with the positioned glass plate placed thereon, and a cutting device that is movable in the front-rear direction. In the cutting processing area, after the cutting device moves rearward in the front-rear direction toward the outside in the width direction of the peripheral area of the glass plate placed on the cutting processing table, the cutting processing table is moved in the width direction toward the cutting device by the first moving mechanism, and the outline cutting line is formed on the glass plate placed on the cutting processing table using the cutting device. The bend-breaking processing area includes a bend-breaking processing table on which the glass plate subjected to the cutting processing is placed, and a bend-breaking device movable in the front-rear direction and the width direction. In the bend-breaking processing area, after the bend-breaking device moves to the rear side in the front-rear direction toward the bend-breaking processing table, a scoring line (scribe) is formed at a scoring line forming location in the peripheral area of the glass plate placed on the bend-breaking processing table using the bend-breaking device, and the peripheral area outside the outline cutting line of the glass plate is bend-broken.

The grinding processing area includes a grinding processing table having a second moving mechanism that moves in the width direction in a state where the positioned glass plate body after the bend-breaking processing has been placed, and a grinding device that is movable in the front-rear direction. In the grinding processing area, after the grinding device moves backward in the front-rear direction toward the outside in the width direction of the edge portion of the glass plate body placed on the grinding processing table, the grinding processing table is moved in the width direction toward the grinding device by the second moving mechanism, and the edge portion of the glass plate body placed on the grinding processing table is ground using the grinding device. Note that the cutting processing and the grinding processing are performed in synchronization.

### Citation List

### Patent Literature

Patent Literature 1: JP 2020-040877 A

### Summary of Invention

### Technical Problem

The bend-breaking device of the glass plate processing system disclosed in Patent Literature 1 includes a bend-breaking jig, a first lifting mechanism (air cylinder), a pressing roller, and a second lifting mechanism (air cylinder). The bend-breaking jig includes a bend-breaking cutter wheel that forms a scoring line at a predetermined scoring line forming location in a peripheral area of a glass plate, and a bend-breaking cutter holder that is positioned above the bend-breaking cutter wheel and supports the bend-breaking cutter wheel. The bend-breaking cutter holder includes a holder main body having a connecting portion, and a holder head attached to a distal end of the holder main body. The bend-breaking cutter holder rotates in the circumferential direction (around axis) with respect to the cutter holder center axis extending in the vertical direction by the rotation of the θ-axis servomotor.

The holder head is connected to the holder main body via a bearing, and is rotatable in the circumferential direction (θ direction) with respect to the cutter holder center axis of the bend-breaking cutter holder. A rotation angle restricting pin that restricts rotation of the holder head in a direction around the cutter holder center axis is inserted into the holder main body. The rotation angle restricting pin restricts the rotation of the holder head in the circumferential direction with respect to the cutter holder center axis to 5 to 10°. The bend-breaking cutter wheel is rotatably attached to the tip of the holder head via a rolling shaft. The cutter wheel axis extending in the vertical direction of the bend-breaking cutter wheel is eccentric radially outward with respect to the cutter holder center axis of the holder main body.

The bend-breaking processing in the glass plate processing system disclosed in Patent Literature 1 is as follows. The bend-breaking jig and the pressing roller of the bend-breaking device are moved in the front-rear direction (X direction) and the width direction (Y direction) by the X-axis actuator and the Y-axis actuator, the bend-breaking cutter wheel of the bend-breaking jig is located in the vicinity of the outer side of the outline cutting line of the glass plate, and the pressing roller is located in the peripheral area outside the outline cutting line of the glass plate. Next, as the shaft of the θ-axis servomotor rotates, the bend-breaking cutter holder rotates in a circumferential direction (θ direction) with respect to the cutter holder center axis, and the rolling direction of the bend-breaking cutter wheel changes to a direction in which the virtual scoring line of the edge portion of the glass plate extends (moving direction of bend-breaking jig).

After the rolling direction of the bend-breaking cutter wheel becomes the same as the direction in which the virtual scoring line extends (moving direction of bend-breaking jig), the first lifting mechanism lowers the bend-breaking jig toward the upper surface of the glass plate and the vicinity of the outer side of the outline cutting line, and the bend-breaking cutter wheel comes into contact with the upper surface of the glass plate and the vicinity of the outer side of the outline cutting line. Next, the bend-breaking device linearly moves from a scoring line forming start point in the vicinity of the outer side of the outline cutting line of the glass plate toward a scoring line forming end point of the peripheral edge of the glass plate, and forms a scoring line at the scoring line forming location in the peripheral area of the glass plate by the bend-breaking cutter wheel. After the scoring line is formed at the scoring line forming location in the peripheral area of the glass plate, the bend-breaking jig of the bend-breaking device moves to a predetermined location in the peripheral area of the glass plate. Next, the pressing roller is lowered toward the upper surface of the glass plate by the second lifting mechanism, and the pressing roller in contact with the upper surface of the glass plate presses the peripheral area of the glass plate downward, thereby bend-breaking the peripheral area extending from the main body of the glass plate to the outer side of the outline cutting line of the glass plate.

In the bend-breaking processing in the glass plate processing system disclosed in Patent Literature 1, the rotation of the shaft of the θ-axis servomotor changes the rolling direction of the bend-breaking cutter wheel to the direction in which the virtual scoring line of the edge portion of the glass plate extends (moving direction of bend-breaking jig). However, it is necessary to install the θ-axis servomotor and a transmission member (pulley, belt, or the like) for transmitting the rotational force of the shaft to the bend-breaking cutter holder in the glass plate processing system, and it is not possible to reduce the size, energy saving, and cost of the system. Furthermore, in the bend-breaking processing, the shaft of the θ-axis servomotor is rotated to make the rolling direction of the bend-breaking cutter wheel the same as the extending direction of the virtual scoring line of the edge portion of the glass plate (moving direction of bend-breaking jig), and it is necessary to change the rolling direction of the bend-breaking cutter wheel using the θ-axis servomotor every time the scoring line is formed, so that it is not possible to shorten the time and improve the efficiency of the bend-breaking process.

An object of the present invention is to provide a bend-breaking device capable of changing a rolling direction of a bend-breaking cutter wheel in a peripheral area of a glass plate to a planned direction in which a scoring line to be formed next will extend simultaneously with formation of the scoring line in bend-breaking processing without using a θ-axis servomotor or a transmission member (pulley, belt, or the like). Another object of the present invention is to provide a bend-breaking device that can achieve miniaturization, energy saving, and cost reduction, and can achieve reduction in time and efficiency of bend-breaking processing.

### Solution to Problem

A premise of the present invention for solving the above problems is a bend-breaking device using a bend-breaking jig including a bend-breaking cutter wheel that forms a scoring line on a glass plate to be processed and a bend-breaking cutter holder that supports the bend-breaking cutter wheel, forming an outline cutting line on the glass plate, then forming a scoring line in a peripheral area of the glass plate extending outside the outline cutting line by the bend-breaking jig, and bend-breaking the peripheral area of the glass plate on which the scoring line is formed.

A feature of the present invention in the above premise is that a cutter wheel axis extending in a vertical direction of the bend-breaking cutter wheel is eccentric radially outward with respect to a cutter holder center axis extending in the vertical direction of the bend-breaking cutter holder, the bend-breaking cutter wheel is rotatable by 360° in a direction around the cutter holder center axis with respect to the bend-breaking cutter holder, and the bend-breaking device comprises: a scoring line forming means that moves the bend-breaking jig from a scoring line forming start point in the vicinity of an outer side of the outline cutting line toward an outer peripheral edge of the glass plate, and forms the scoring line extending in a predetermined direction at a scoring line forming location in the peripheral area of the glass plate, and a rolling direction first changing means that, after the bend-breaking cutter wheel moves to a rolling direction change point in the vicinity of an inner side of the outer peripheral edge of the glass plate, causes the bend-breaking jig to travel, in parallel with an upper surface of the peripheral area of the glass plate, on the upper surface in a planned direction in which a scoring line to be formed next will extend and causes the bend-breaking cutter wheel in contact with the upper surface of the peripheral area of the glass plate to rotate in a direction around the cutter holder center axis to change a rolling direction of the bend-breaking cutter wheel to the planned direction in which the scoring line to be formed next will extend, and forms a scoring line extending in the planned direction at the scoring line forming location in the peripheral area of the glass plate.

According to an example of the present invention, the bend-breaking device further includes a rolling direction second changing means that, in a case where an initial scoring line is formed in the peripheral area of the glass plate, causes the bend-breaking jig to travel slightly from the scoring line forming start point or a vicinity of the scoring line forming start point in parallel with the upper surface of the peripheral area of the glass plate, on the upper surface in a planned direction in which the initially formed scoring line will extend, rotates the bend-breaking cutter wheel in contact with the upper surface of the glass plate in a direction around the cutter holder center axis, and changes the rolling direction of the bend-breaking cutter wheel to the planned direction in which the initially formed scoring line will extend.

According to another example of the present invention, the bend-breaking device further includes a first lifting mechanism that lifts and lowers the bend-breaking cutter holder in a vertical direction and a holder first lowering means that lowers the bend-breaking cutter holder toward the upper surface of the glass plate and toward the scoring line forming start point by the first lifting mechanism when forming a next scoring line with respect to the peripheral area of the glass plate, in which the scoring line forming means lowers the bend-breaking cutter holder toward the upper surface of the peripheral area of the glass plate by the holder first lowering means to bring the bend-breaking cutter wheel into contact with the upper surface of the glass plate, and then causes the bend-breaking jig to travel from the scoring line forming start point toward the rolling direction change point, so that the bend-breaking cutter wheel forms a scoring line extending in the planned direction at a scoring line forming location in the peripheral area of the glass plate.

According to another example of the present invention, the bend-breaking device further includes a holder second lowering means that lowers the bend-breaking cutter holder toward the upper surface of the glass plate and toward the scoring line forming start point or the vicinity of the scoring line forming start point by the first lifting mechanism at the time of forming the initial scoring line with respect to the peripheral area of the glass plate, wherein the rolling direction second changing means lowers the bend-breaking cutter holder toward the upper surface of the glass plate by the holder second lowering means to bring the bend-breaking cutter wheel into contact with the upper surface of the glass plate, and then causes the bend-breaking jig to travel slightly at the scoring line forming start point or the vicinity of the scoring line forming start point to change the rolling direction of the bend-breaking cutter wheel to a planned direction in which the initially formed scoring line will extend.

According to another example of the present invention, the bend-breaking device further includes a holder lifting means that lifts the bend-breaking cutter holder from the upper surface of the glass plate by the first lifting mechanism after forming the scoring line at a scoring line forming location in the peripheral area of the glass plate, and a jig moving means that moves the bend-breaking jig to a next scoring line forming location in the peripheral area of the glass plate after lifting the bend-breaking cutter holder by the holder lifting means, in which the holder first lowering means moves the bend-breaking jig to the next scoring line forming location by the jig moving means, and then lowers the bend-breaking cutter holder toward the upper surface of the peripheral area of the glass plate and toward the scoring line forming start point by the first lifting mechanism at the next scoring line forming location, the scoring line forming means causes the bend-breaking jig to travel in the planned direction from the scoring line forming start point toward the rolling direction change point at the next scoring line forming location to form a scoring line extending in the planned direction in the peripheral area of the glass plate, and at the rolling direction change point at the next scoring line forming location, the rolling direction first changing means causes the bend-breaking jig to travel, in parallel with the upper surface of the peripheral area of the glass plate, on the upper surface in a planned direction in which a scoring line to be formed next will extend and causes the bend-breaking cutter wheel in contact with the upper surface of the peripheral area of the glass plate to rotate in a direction around the cutter holder center axis to change the rolling direction of the bend-breaking cutter wheel to the planned direction in which the scoring line to be formed next will extend, and forms a scoring line extending in the planned direction from the vicinity of the inner side of the outer peripheral edge of the glass plate toward the outer peripheral edge.

According to another example of the present invention, the rolling direction second changing means causes the bend-breaking jig to draw a circular trajectory toward the rolling direction change point at the scoring line forming start point, or causes the bend-breaking jig to draw a circular trajectory from a vicinity of the scoring line forming start point toward the scoring line forming start point, so that the rolling direction of the bend-breaking cutter wheel changes to a planned direction in which the initially formed scoring line will extend.

According to another example of the present invention, the rolling direction second changing means causes the bend-breaking jig to linearly travel from a vicinity of the scoring line forming start point toward the scoring line forming start point on the upper surface of the peripheral area of the glass plate at the scoring line forming location so that an angle formed by a planned direction in which the initially formed scoring line in the peripheral area of the glass plate will extend and a traveling direction of the bend-breaking jig toward the scoring line forming start point is 90° or less, changes the rolling direction of the bend-breaking cutter wheel to the traveling direction of the bend-breaking jig, and then changes the traveling direction of the bend-breaking jig to the planned direction in which the initially formed scoring line at the scoring line forming start point will extend at the angle of 90° or less, and changes the rolling direction of the bend-breaking cutter wheel to the planned direction in which the initially formed scoring line will extend.

According to another example of the present invention, the rolling direction second changing means causes the bend-breaking jig to travel from a vicinity of the scoring line forming start point toward the scoring line forming start point along a planned direction in which the initially formed scoring line in the peripheral area of the glass plate at the scoring line forming location will extend, or causes the bend-breaking jig to travel on the initially formed virtual scoring line in the peripheral area of the glass plate at the scoring line forming location from a vicinity of the scoring line forming start point toward the scoring line forming start point, and reverses the bend-breaking jig at the scoring line forming start point to change a traveling direction of the bend-breaking jig to the planned direction in which the initially formed scoring line will extend, and changes the rolling direction of the bend-breaking cutter wheel to the planned direction in which the initially formed scoring line will extend.

According to another example of the present invention, the bend-breaking jig includes a pressing member that presses the peripheral area of the glass plate on which the scoring line is formed, and a second lifting mechanism that lifts and lowers the pressing member, and the bend-breaking device further includes a press-bend-breaking means that, after the scoring line is formed at a scoring line forming location in the peripheral area of the glass plate by the bend-breaking cutter wheel, lowers the pressing member toward the peripheral area of the glass plate by the second lifting mechanism, and bend-breaks the peripheral area of the glass plate from a main body of the glass plate by pressing the peripheral area of the glass plate downward by the pressing member.

### Advantageous Effects of Invention

According to the bend-breaking device according to the present invention, a bend-breaking jig is moved from a scoring line forming start point in the vicinity of the outer side of an outline cutting line toward an outer peripheral edge of a glass plate, a scoring line extending in a predetermined direction is formed at a scoring line forming location in a peripheral area of the glass plate, a bend-breaking cutter wheel is moved to a rolling direction change point in the vicinity of the inner side of the outer peripheral edge of the glass plate, the bend-breaking jig is caused to travel in a planned direction in which a scoring line forming an upper surface next will extend in parallel to an upper surface of the peripheral area of the glass plate, and the bend-breaking cutter wheel in contact with the upper surface of the peripheral area of the glass plate is caused to rotate in a circumferential direction with respect to a cutter holder center axis, and a rolling direction of the bend-breaking cutter wheel is changed to a planned direction in which the scoring line forming next will extend, since the scoring line extending in the planned direction is formed in the vicinity of the inner side of the outer peripheral edge of the glass plate, the rolling direction of the bend-breaking cutter wheel in which the cutter wheel axis is eccentric radially outward with respect to the cutter holder center axis of the bend-breaking cutter holder can be changed to the planned direction in which the scoring line to be formed next will extend between the rolling direction change point and the outer peripheral edge of the glass plate. At the same time as the formation of the scoring line in the bend-breaking processing, the rolling direction of the bend-breaking cutter wheel can be changed to the planned direction in which the scoring line to be formed next will extend in the peripheral area of the glass plate, and the rolling direction of the bend-breaking cutter wheel can be changed to the planned direction in which the scoring line to be formed next will extend in a series of operations of forming the scoring line in the peripheral area of the glass plate. The bend-breaking device does not need to use a θ-axis servomotor or a transmission member (a pulley, a belt, or the like) that transmits a rotational force of a shaft of the θ-axis servomotor to the bend-breaking cutter holder, and can achieve size reduction, energy saving, and cost reduction of the bend-breaking device. In the bend-breaking device, it is not necessary to rotate the shaft of the θ-axis servomotor in the bend-breaking processing to make the rolling direction of the bend-breaking cutter wheel the same as the extending direction of the virtual scoring line of the edge portion of the glass plate, and it is not necessary to change the rolling direction of the bend-breaking cutter wheel using the θ-axis servomotor every time the scoring line is formed. Therefore, time reduction and efficiency of the bend-breaking processing can be achieved.

In the bend-breaking device according to claim 2, the bend-breaking jig slightly travels from the scoring line forming start point or the vicinity of the scoring line forming start point of the upper surface of the peripheral area of the glass plate toward the planned extending direction of the initially formed scoring line, so that the bend-breaking cutter wheel rotates in the circumferential direction (around axis) with respect to the cutter holder center axis, and the rolling direction of the bend-breaking cutter wheel changes to the planned extending direction of the initially formed scoring line. Therefore, the rolling direction of the bend-breaking cutter wheel can be quickly and easily changed to the planned extending direction of the initially formed scoring line, and the initial scoring line extending in the planned direction can be formed in the peripheral area of the glass plate.

In the bend-breaking device according to claim 3, after the bend-breaking cutter holder is lowered to the upper surface of the peripheral area of the glass plate by the first lifting mechanism, the bend-breaking jig is caused to travel from the scoring line forming start point toward the rolling direction change point, and the scoring line extending in the planned direction is formed at the scoring line forming location of the peripheral area of the glass plate. Therefore, the scoring lines extending in the planned direction can be formed at the plurality of scoring line forming locations of the peripheral area of the glass plate, the peripheral area of the glass plate can be reliably cut at the outline cutting lines and the scoring lines, and the entire peripheral area outside the outline cutting lines of the glass plate can be smoothly and reliably bend-broken.

In the bend-breaking device according to claim 4, after the bend-breaking cutter holder is moved downward toward the upper surface of the glass plate and toward the scoring line forming start point or the vicinity of the scoring line forming start point by the first lifting mechanism, the bend-breaking jig slightly travels from the scoring line forming start point or the vicinity of the scoring line forming start point of the upper surface of the peripheral area of the glass plate toward the planned direction in which the initially formed scoring line will extend, so that the bend-breaking cutter wheel rotates in the circumferential direction (around axis) with respect to the cutter holder center axis, and the rolling direction of the bend-breaking cutter wheel changes to the planned direction in which the initially formed scoring line will extend. Therefore, the rolling direction of the bend-breaking cutter wheel can be quickly and easily changed to the planned direction in which the initially formed scoring line will extend, and the initial scoring line extending in the planned direction in the peripheral area of the glass plate can be formed.

The bend-breaking device according to claim 5, in which after the scoring line is formed at the scoring line forming location in the peripheral area of the glass plate, the first lifting mechanism lifts the bend-breaking cutter holder from the upper surface of the glass plate, the first lifting mechanism lifts the bend-breaking cutter holder, the first lifting mechanism moves the bend-breaking jig to the next scoring line forming location in the peripheral area of the glass plate, the first lifting mechanism moves the bend-breaking jig to the next scoring line forming location, and then the first lifting mechanism moves the bend-breaking cutter holder toward the upper surface of the peripheral area of the glass plate at the next scoring line forming location and lowers the bend-breaking cutter holder toward the scoring line forming start point to form the scoring line at the next scoring line forming location, and at the rolling direction change point at the next scoring line forming location, the rolling direction of the bend-breaking cutter wheel is changed to the planned direction in which the scoring line to be formed next. Since the scoring lines extending in the planned direction from the vicinity of the inside of the outer peripheral edge of the glass plate toward the outer peripheral edge are formed, the scoring lines extending in the planned direction can be formed at a plurality of scoring line forming locations in the peripheral area of the glass plate, the peripheral area of the glass plate can be reliably cut at the outline cutting lines and the scoring lines, and the entire peripheral area outside the outline cutting lines of the glass plate can be smoothly and reliably cut.

In the bend-breaking device according to claim 6, by causing the bend-breaking jig to draw a circular trajectory toward the rolling direction change point at the scoring line forming start point or causing the bend-breaking jig to draw a circular trajectory from the vicinity of the scoring line forming start point toward the scoring line forming start point, the rolling direction of the bend-breaking cutter wheel is changed to the planned direction in which the initially formed scoring line will extend. Therefore, the bend-breaking cutter wheel can be reliably rotated in the circumferential direction (around axis) with respect to the cutter holder center axis, and the rolling direction of the bend-breaking cutter wheel can be reliably changed to the planned direction in which the initially formed scoring line will extend. In the bend-breaking device, the bend-breaking cutter wheel itself is rotated around a rotation center of the bend-breaking cutter holder, a rotation control axis for rotating the bend-breaking cutter wheel itself is set as a cutter holder center axis of the bend-breaking cutter holder, and an angle of the rotation control axis is adjusted to a rolling direction of the bend-breaking cutter wheel (traveling direction of bend-breaking jig), whereby an error due to eccentricity can be minimized.

The bend-breaking device according to claim 7, wherein the bend-breaking jig is caused to travel linearly from the vicinity of the scoring line forming start point toward the scoring line forming start point so that an angle formed by a planned direction in which the initially formed scoring line in the peripheral area of the glass plate will extend and a traveling direction of the bend-breaking jig toward the scoring line forming start point is 90° or less, the rolling direction of the bend-breaking cutter wheel is changed to the traveling direction of the bend-breaking jig, and then the traveling direction of the bend-breaking jig is changed to the planned direction in which the initially formed scoring line at the scoring line forming start point will extend at an angle of 90° or less, and therefore the bend-breaking cutter wheel can be reliably rotated in a circumferential direction (around axis) with respect to a cutter holder center axis, and it is possible to reliably change the rolling direction of the bend-breaking cutter wheel to the planned direction in which the initially formed scoring line will extend. In the bend-breaking device, the bend-breaking cutter wheel itself is rotated around a rotation center of the bend-breaking cutter holder, a rotation control axis for rotating the bend-breaking cutter wheel itself is set as a cutter holder center axis of the bend-breaking cutter holder, and an angle of the rotation control axis is adjusted to a rolling direction of the bend-breaking cutter wheel (traveling direction of bend-breaking jig), whereby an error due to eccentricity can be minimized.

The bend-breaking device according to claim 8, wherein the bend-breaking jig is caused to travel from the vicinity of the scoring line forming start point toward the scoring line forming start point along the planned direction in which the initially formed scoring line in the peripheral area of the glass plate at the scoring line forming location will extend, or is caused to travel from the vicinity of the scoring line forming start point toward the scoring line forming start point on the initially formed virtual scoring line in the peripheral area of the glass plate at the scoring line forming location, and the direction of travel of the bend-breaking jig is changed to the planned direction in which the initially formed scoring line by reversing the bend-breaking jig at the scoring line forming start point will extend, so that the bend-breaking cutter wheel can be reliably rotated in the circumferential direction (around axis) with respect to the cutter holder center axis, and it is possible to reliably change the rolling direction of the bend-breaking cutter wheel to the planned direction in which the initially formed scoring line will extend. In the bend-breaking device, the bend-breaking cutter wheel itself is rotated around a rotation center of the bend-breaking cutter holder, a rotation control axis for rotating the bend-breaking cutter wheel itself is set as a cutter holder center axis of the bend-breaking cutter holder, and an angle of the rotation control axis is adjusted to a rolling direction of the bend-breaking cutter wheel (traveling direction of bend-breaking jig), whereby an error due to eccentricity can be minimized.

In the bend-breaking device according to claim 9, after the scoring line is formed at the scoring line forming location in the peripheral area of the glass plate by the bend-breaking cutter wheel, the pressing member is lowered toward the peripheral area of the glass plate by the second lifting mechanism, and the pressing member presses the peripheral area of the glass plate downward, so that the peripheral area of the glass plate can be reliably bend-broken from the main body of the glass plate at the outline cutting line and the scoring line, the peripheral area outside the outline cutting line of the glass plate can be smoothly and reliably bend-broken, and the bend-breaking processing can be efficiently performed in a short time.

### Brief Description of Drawings

Fig. 1 is a side view of a glass plate processing system including a bend-breaking device.
Fig. 2 is a top view of the glass plate processing system in Fig. 1.
Fig. 3 is a top view illustrating an example of a glass plate to be processed by the glass plate processing system.
Fig. 4 is a side view of a loading area.
Fig. 5 is a top view of a loading area.
Fig. 6 is a front view of a loading area.
Fig. 7 is a top view of a cutting processing table and a grinding processing table.
Fig. 8 is a side view of a cutting processing table and a grinding processing table.
Fig. 9 is a diagram for explaining movement of a cutting processing table and a grinding processing table.
Fig. 10 is a side view of a cutting device as an example installed in a cutting processing area.
Fig. 11 is a front view of a cutting device.
Fig. 12 is a top view of a bend-breaking processing table.
Fig. 13 is a side view of a bend-breaking processing table.
Fig. 14 is a side view of a bend-breaking device.
Fig. 15 is a front view of a bend-breaking device.
Fig. 16 is a top view of a bend-breaking device.
Fig. 17 is an enlarged front view of a bend-breaking device.
Fig. 18 is an enlarged front view of a bend-breaking device.
Fig. 19 is a partially broken side view of first and second bend-breaking jigs.
Fig. 20 is a front view of first and second bend-breaking jigs.
Fig. 21 is a top view of a bend-breaking processing table in which a support device is exposed.
Fig. 22 is a front view of a bend-breaking processing table in which a support device is viewed from the front.
Fig. 23 is a front view of a grinding device as an example installed in a grinding processing area.
Fig. 24 is a side view of a grinding device.
Fig. 25 is a view illustrating an example of a change in a rolling direction of a bend-breaking cutter wheel.
Fig. 26 is a view illustrating another example of the change of the rolling direction of the bend-breaking cutter wheel.
Fig. 27 is a view illustrating another example of the change of the rolling direction of the bend-breaking cutter wheel.
Fig. 28 is a view illustrating another example of the change of the rolling direction of the bend-breaking cutter wheel.
Fig. 29 is a view illustrating another example of the change of the rolling direction of the bend-breaking cutter wheel.
Fig. 30 is a view illustrating an example of a bend-breaking procedure in a bend-breaking process.

### Description of Embodiments

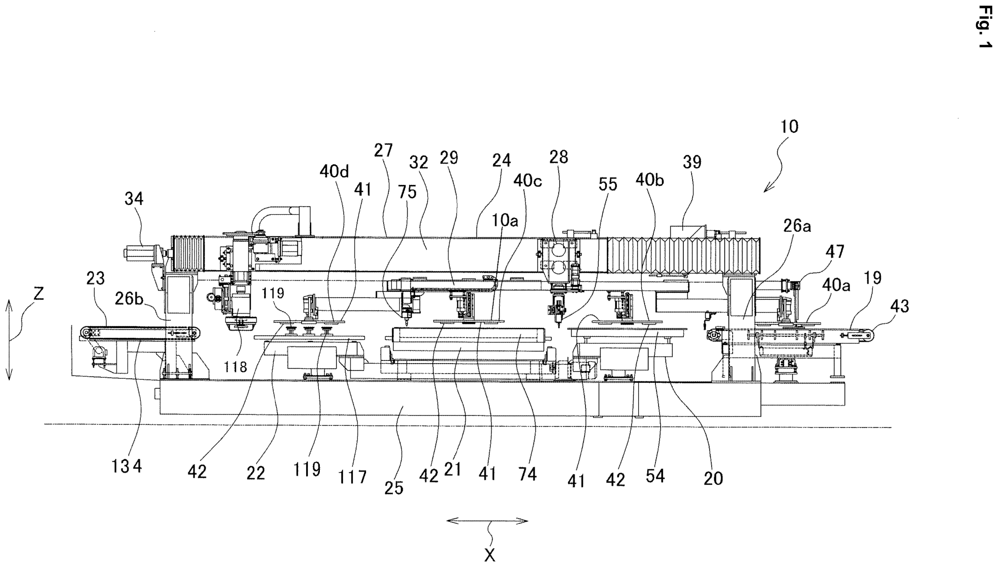

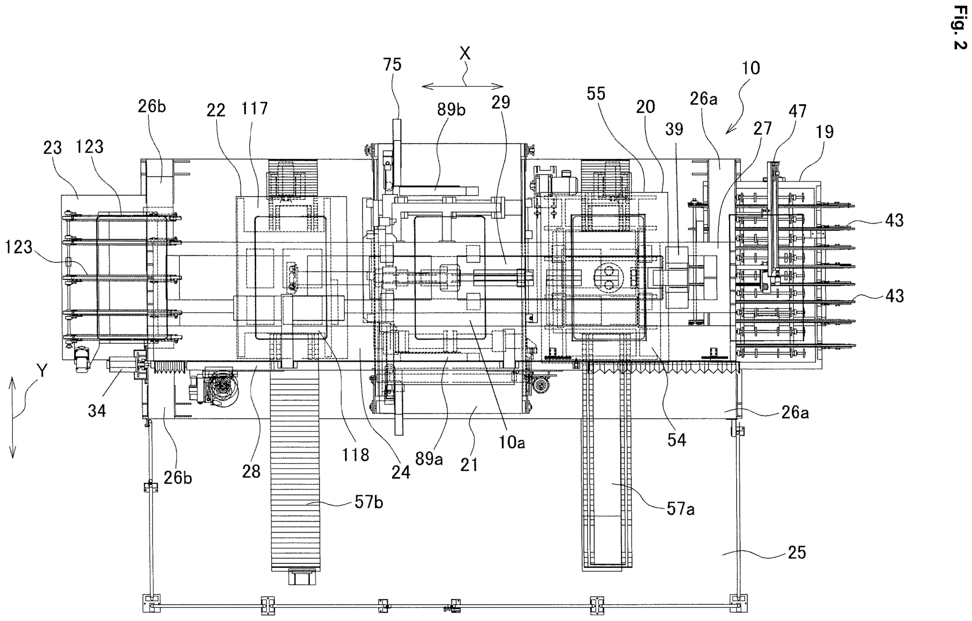

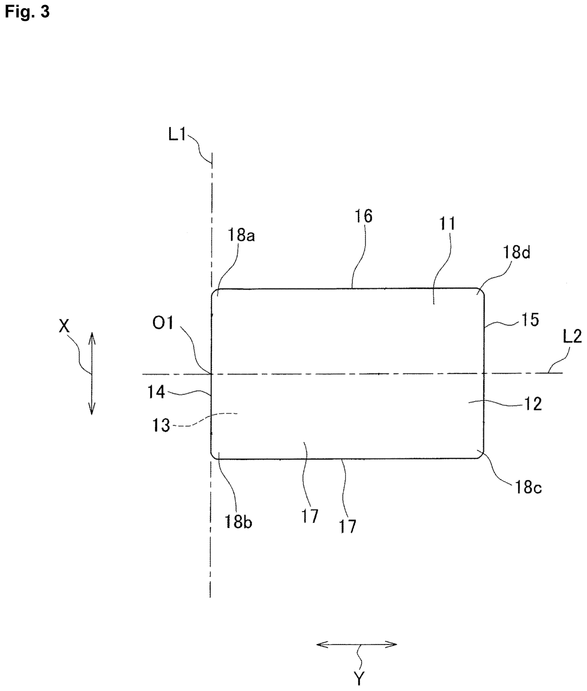

Details of a bend-breaking device according to the present invention will be described below with reference to the accompanying drawings. Fig. 1 is a side view of a glass plate processing system 10 including a bend-breaking device 75, and Fig. 2 is a top view of the glass plate processing system 10 of Fig. 1. Fig. 3 is a top view illustrating an example of a glass plate 11 to be processed by the glass plate processing system 10. Fig. 3 illustrates the glass plate 11 positioned in a loading area 19. In Figs. 1 to 3, a front-rear direction (X-axis direction) is indicated by an arrow X, a width direction (Y-axis direction) is indicated by an arrow Y, and a vertical direction (Z-axis direction) is indicated by an arrow Z.

As illustrated in Fig. 3, the glass plate 11 (glass plate 11 before processing) to be processed in the glass plate processing system 10 has an upper surface 12 and a lower surface 13 of a predetermined area, has a predetermined thickness, and is formed into a rectangle (quadrangle) whose planar shape is long in the width direction. The glass plate 11 includes a first side edge 14 (one side edge) and a second side edge 15 (other side edge) that are spaced apart from each other in the width direction and extend in the front-rear direction, a front end edge 16 and a rear end edge 17 that are spaced apart from each other in the front-rear direction and extend in the width direction, and first to fourth corners 18a to 18d. Note that the planar shape of the glass plate to be processed may be formed into a polygon other than a rectangle (quadrangle), and may be formed so that each edge of the glass plate draws a curved curve, and the shape of the glass plate includes any shape.

The glass plate processing system 10 performs cutting processing, bend-breaking processing, and grinding processing on the glass plate 11 (plate-shaped glass) to be processed. The glass plate processing system 10 is controlled by a controller (not illustrated). The controller is a computer that includes a central processing unit (CPU or MPU) and a memory (main memory and cache memory) and is operated by an independent operating system, and has a large-capacity hard disk (large-capacity storage area) built thereinto.

In the large-capacity hard disk (large-capacity storage area) of the controller, a plurality of pieces of coordinate data (coordinates of both side edges of glass plate 11, coordinates of front and rear end edges, coordinates of first to fourth corners 18a to 18d, coordinates of center of glass plate 11, and the like) of the glass plate 11 different depending on the name and the product number of each glass plate 11 to be processed, the size (area) and the shape of each glass plate 11 to be processed, and image data (planar image (6-plane image) and stereoscopic image (3D image)) of the glass plate 11 are stored in association with glass plate identification information (glass plate identification identifier) for specifying the glass plate 11. In the large-capacity hard disk of the controller, directions (orientations) of the respective scoring lines formed in a peripheral area 56b of the glass plate 11 are stored in association with glass plate identification information (glass plate identification identifier). As the glass plate identification information, a manufacturing number, a serial number, or the like of the glass plate 11 is used, and a controller may generate a unique identifier for specifying the glass plate 11 and use the generated identifier as the glass plate identification information.

In the cutting processing in a cutting processing area 20, the bend-breaking processing in a bend-breaking processing area 21, and the grinding processing in a grinding processing area 22, the controller NC controls a loading area 19, a cutting device 55, a bend-breaking device 75, and a grinding device 118 using the coordinate data of the glass plate 11 stored in the large-capacity hard disk. In the NC control, the controller quantifies a position at which processing is started (XY plane coordinates) and a change position of a processing direction by coordinates, and quantifies an operation direction, a distance, and a speed in two axes of an X-axis (front-rear direction) and a Y-axis (width direction). Signals obtained by quantifying the command coordinates and the axes are transmitted (input) to the cutting device 55, the bend-breaking device 75, and the grinding device 118. In the NC control, a shape to be processed is accurately represented by repeating "coordinate → axis → command".

The glass plate processing system 10 includes a loading area 19 into which the glass plate 11 before processing is loaded, an unloading area 23 from which the glass plate 11 after processing is unloaded, processing areas 20 to 22 that are disposed between the loading area 19 and the unloading area 23 and processing the glass plate 11, and a conveyance mechanism 24 that sequentially conveys the glass plate 11 from the rear side (upstream) toward the front side (downstream) in the front-rear direction to the processing areas 20 to 22 and the unloading area 23.

The processing areas 20 to 22 includes a cutting processing area 20 located forward (downstream) in the front-rear direction of the loading area 19, a bend-breaking processing area 21 located forward (downstream) in the front-rear direction of the cutting processing area 20, and a grinding processing area 22 located forward (downstream) in the front-rear direction of the bend-breaking processing area 21. The cutting processing area 20, the bend-breaking processing area 21, and the grinding processing area 22 are formed on a machine table 25 formed in a quadrangular shape elongated in the front-rear direction.

The conveyance mechanism 24 includes a pair of first pillars 26a located at the rear of the machine table 25 and extending in the vertical direction, a pair of second pillars 26b located at the front of the machine table 25 and extending in the vertical direction, a fixed frame 27 located between the first and second pillars 26a and 26b and extending in the front-rear direction, a first moving unit 28 (first moving means) installed on one side of the fixed frame 27, and a second moving unit 29 (second moving means) installed under the fixed frame 27 different from the fixed frame 27.

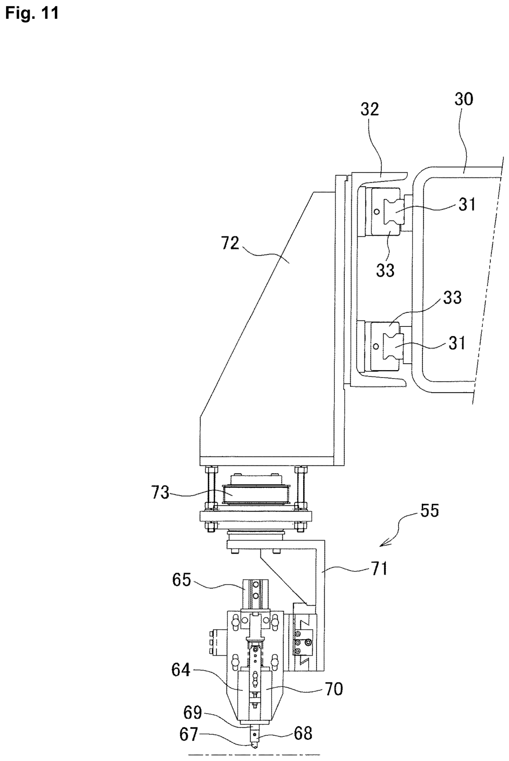

The first moving unit 28 moves the cutting device 55 and the grinding device 118 forward and backward (linearly) in the front-rear direction (X-axis direction). The first moving unit 28 includes a first guide frame 30, a pair of first guide rails 31, a first feed screw (ball screw) (not illustrated), a first traveling frame 32, a plurality of first slide blocks (housing nuts) (not illustrated), a pair of first guide shoes 33, and a first servomotor 34 (see Fig. 11).

The fixed frame 27 and the first guide frame 30 are connected between the first and second pillars 26a and 26b and extend in the front-rear direction. The first guide rails 31 are spaced apart from and face each other in the vertical direction, are fixed to one side portion of the first guide frame 30 by a predetermined fixing means, and extend in the front-rear direction. The first feed screw (ball screw) is located between the first guide rails 31, is rotatably supported by a plurality of bearings (not illustrated) fixed to one side of the first guide frame 30, and extends in the front-rear direction.

The first traveling frame 32 extends in the front-rear direction at a predetermined interval laterally from one side portion of the first guide frame 30. The first slide blocks (ball screw nuts) are arranged side by side at a predetermined interval in the front-rear direction, and are fixed to a facing surface of the first traveling frame 32 facing the first guide frame 30 by a predetermined fixing means. The first guide shoes 33 face each other with a distance therebetween in the vertical direction, are fixed to the facing surface of the first traveling frame 32 facing the first guide frame 30 by a predetermined fixing means, and extend in the front-rear direction. The first servomotor 34 is located at the front end portion of the first guide frame 30 and is connected to the second pillar 26b via a bracket. The shaft of the first servomotor 34 is coupled and fixed to the other end portion of the first feed screw.

When the shaft of the first servomotor 34 rotates in the counterclockwise direction, the first feed screw rotates in the counterclockwise direction, whereby the first slide block moves in the front-rear direction from the front side to the rear side of the first guide frame 30, and the first traveling frame 32 linearly moves in the front-rear direction from the front side to the rear side of the first guide frame 30 by the movement of the first slide block. Conversely, when the shaft of the first servomotor 34 rotates in the clockwise direction, the first feed screw rotates in the clockwise direction, whereby the first slide block moves in the front-rear direction from the rear side toward the front side of the first guide frame 30, and the movement of the first slide block causes the first traveling frame 32 to linearly move in the front-rear direction from the rear side toward the front side of the first guide frame 30.

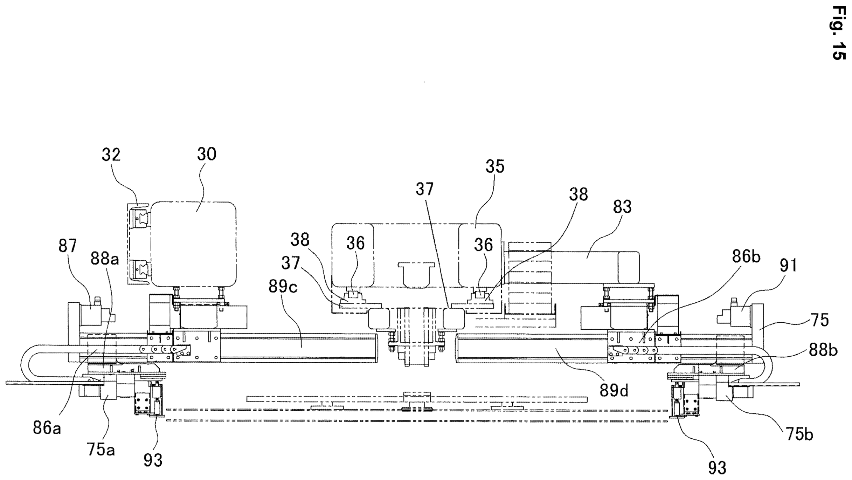

The second moving unit 29 moves glass plate first to fourth holders 40a to 40d forward and backward (linearly) in the front-rear direction (X-axis direction). The second moving unit 29 includes a second guide frame 35, a pair of second guide rails 36, a second feed screw (ball screw) (not illustrated), a second traveling frame 37, a plurality of second slide blocks (housing nuts) (not illustrated), a pair of second guide shoes 38, a second servomotor 39, and glass plate first to fourth holders 40a to 40d (glass plate first to fourth lifters) (see Fig. 15).

The fixed frame 27 and the second guide frame 35 are connected between the first and second pillars 26a and 26b and extend in the front-rear direction. The second guide rails 36 face each other with a distance therebetween in the width direction, are fixed to a lower portion of the second guide frame 35 by a predetermined fixing means, and extend in the front-rear direction. The second feed screw (ball screw) is located between the second guide rails 36, is rotatably supported by a plurality of bearings (not illustrated) fixed to a lower portion of the second guide frame 35, and extends in the front-rear direction.

The second traveling frame 37 is located below the second guide frame 35 and extends in the front-rear direction. The second slide blocks (housing nuts) are arranged side by side at a predetermined interval in the width direction, and are fixed to a facing surface of the second traveling frame 37 facing the second guide frame 35 by a predetermined fixing means. The second guide shoes 38 face each other with a distance therebetween in the width direction, are fixed to the facing surface of the second traveling frame 37 facing the second guide frame 35 by a predetermined fixing means, and extend in the front-rear direction. The second servomotor 39 is located at the rear end portion of the second guide frame 35 and is fixed to the second guide frame 35. The shaft of the second servomotor 39 is coupled and fixed to one end portion of the second feed screw via a timing belt (and/or gear).

When the shaft of the second servomotor 39 rotates in the clockwise direction, the second feed screw rotates in the clockwise direction, whereby the second slide block moves in the front-rear direction from the rear side toward the front side of the second guide frame 35, and the second traveling frame 37 (glass plate first to fourth holders 40a to 40d) moves linearly in the front-rear direction from the rear side toward the front side of the second guide frame 35 by the movement of the second slide block. Conversely, when the shaft of the second servomotor 39 rotates in the counterclockwise direction, the second feed screw rotates in the counterclockwise direction, whereby the second slide block moves in the front-rear direction from the front side to the rear side of the second guide frame 35, and the second traveling frame 37 (glass plate first to fourth holders 40a to 40d) moves linearly in the front-rear direction from the front side to the rear side of the second guide frame 35 by the movement of the second slide block. A control unit that controls start/stop, rotational speed, and angular velocity of the first and second servomotors 34 and 39 is connected to the controller via a signal line (wired or wireless).

The glass plate first to fourth holders 40a to 40d are attached to a lower portion of the second traveling frame 37, extend downward from the traveling frame 37, and are arranged at equal intervals in the front-rear direction. The glass plate first to fourth holders 40a to 40d include a pad mounting plate 41 extending in the front-rear direction, a suction pad 42 that is mounted on the pad mounting plate 41 and sucks and holds the glass plate 11, a vacuum mechanism (air suction device) (not illustrated) including an air vacuum pump, and a pad lifting mechanism (not illustrated). An air cylinder is used for the pad lifting mechanism. A control unit that controls start/stop of the vacuum mechanism and the pad lifting mechanism (air cylinder) is connected to the controller via a signal line.

The glass plate first holder 40a advances from the loading area 19 toward the cutting processing area 20 and retreats from the cutting processing area 20 toward the loading area 19. The glass plate second holder 40b advances from the cutting processing area 20 toward the bend-breaking processing area 21, and retreats from the bend-breaking processing area 21 toward the cutting processing area 20. The glass plate third holder 40c advances from the bend-breaking processing area 21 toward the grinding processing area 22, and retreats from the grinding processing area 22 toward the bend-breaking processing area 21. The glass plate fourth holder 40d advances from the grinding processing area 22 toward the unloading area 23 and retreats from the unloading area 23 toward the grinding processing area 22.

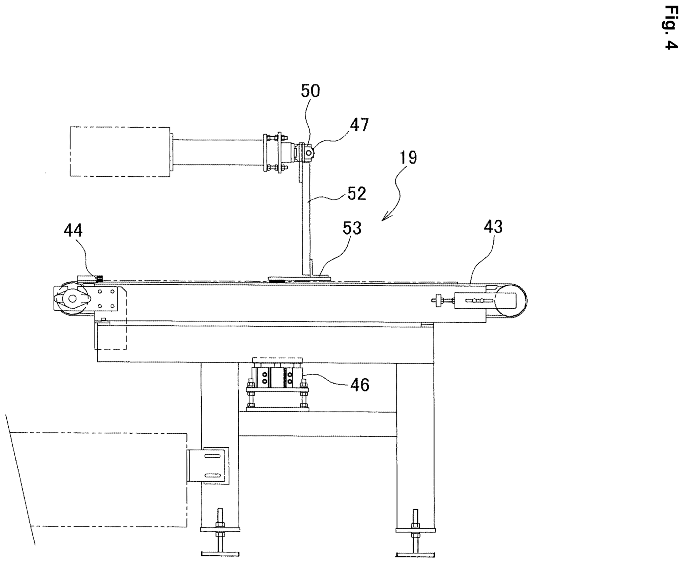

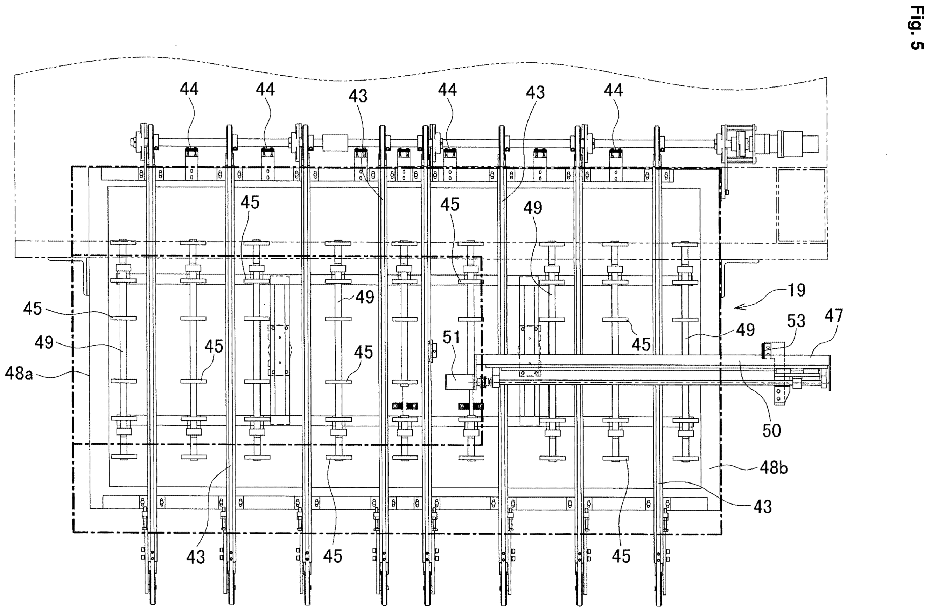

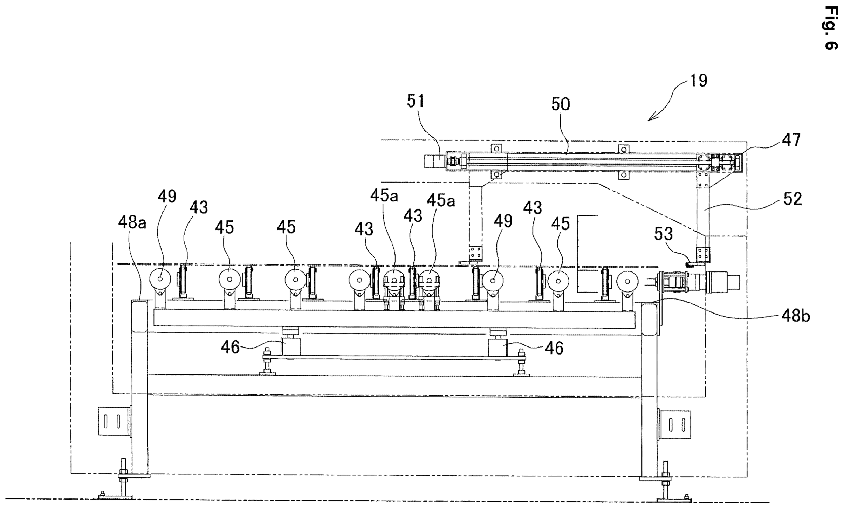

Fig. 4 is a side view of the loading area 19, and Fig. 5 is a top view of the loading area 19. Fig. 6 is a front view of the loading area 19. The loading area 19 includes a loading conveyor 43, a stopper 44, a roller 45, a pair of roller lifting mechanisms 46, and a moving mechanism 47. The loading area 19 is supported by legs extending upward from a floor surface of the machine table 25. In the loading area 19, a first positioning means (first positioning step) and a second positioning means (second positioning step) are performed, and the glass plate 11 is positioned toward each processing areas 20 to 22.

A positioning first reference L1 extending in the front-rear direction and a positioning second reference L2 (see Fig. 3) extending in the width direction are set in one side edge 48a of the loading area 19. The positioning first reference L1 is a virtual line extending straight in the front-rear direction, which is assumed based on the outermost edge located on the outermost side in the width direction among the first side edges 14 extending in the front-rear direction on one side in the width direction of the glass plate 11. For example, in a case where the first side edge 14 (one side edge) of the glass plate 11 draws a curved curve, the outermost edge is a vertex of a curve located outermost in the width direction. When the first side edge 14 (one side edge) of the glass plate 11 extends straight in the front-rear direction, the side edge 14 is the outermost edge.

In the positioning first reference L1, the outermost edge located on the outermost side in the width direction among the first side edges 14 (one side edge) extending in the front-rear direction on one side in the width direction of the glass plate 11 is positioned. Here, positioning the outermost edge at the positioning first reference L1 includes not only a case where the outermost edge completely matches the positioning first reference L1, but also a case where the outermost edge is positioned in the vicinity (nearest) of the inner side in the width direction of the positioning first reference L1, or a case where the outermost edge is positioned in the vicinity (nearest) of the outer side in the width direction of the positioning first reference L1.

In the positioning second reference L2, a front-rear direction center O1 (center line L2 extending in the width direction by dividing the dimension in the front-rear direction of the glass plate 11 in half) of the first side edge 14 (one side edge) extending in the front-rear direction on one side in the width direction of the glass plate 11 is positioned. Here, positioning the front-rear direction center O1 (center line L2) at the positioning second reference L2 includes not only a case where the front-rear direction center O1 completely coincides with the positioning second reference L2, but also a case where the front-rear direction center O1 is positioned in the vicinity (nearest) of the front in the front-rear direction of the positioning second reference L2 or a case where the front-rear direction center O1 is positioned in the vicinity (nearest) of the rear in the front-rear direction of the positioning second reference L2.

The controller (glass plate processing system 10) calculates the dimension in the width direction of the glass plate 11 using the coordinate data of the glass plate 11 stored in the large-capacity hard disk, determines the first movement dimension (first movement distance) in the width direction for positioning the first side edge 14 (one side edge) of the glass plate 11 in the positioning first reference L1 (virtual positioning first reference line) according to the difference in the calculated dimension in the width direction (Y-axis direction) of the glass plate 11, and determines the rotational speed of the shaft of the third servomotor 51 (rotational speed of shaft for moving glass plate 11 by first movement dimension in width direction) based on the determined first movement dimension. The controller stores the determined first movement dimension and the determined rotational speed of the shaft of the third servomotor 51 in the large-capacity hard disk in association with the glass plate identification information of the glass plate 11.

The controller calculates the dimension of the glass plate 11 in the front-rear direction (X-axis direction) using the coordinate data of each glass plate 11 stored in the large-capacity hard disk, and determines the second movement dimension (second movement distance) of the loading conveyor 43 to the rear side in the front-rear direction for positioning the front-rear direction center O1 of one side edge 14 of the glass plate 11 in the positioning second reference L2 (virtual positioning second reference line) according to the difference in the calculated dimension of the glass plate 11 in the front-rear direction. The controller stores the determined second movement dimension in the large-capacity hard disk in a state of being associated with the glass plate identification information (glass plate identification identifier) of the glass plate 11.

The controller calculates the movement dimension (movement distance) of the cutting device 55 and the grinding device 118 in the front-rear direction from the coordinate data of the processing shape, and determines the rotational speed of the shaft of the first servomotor 34 (rotational speed of shaft that moves cutting device 55 and grinding device 118 by movement dimension in front-rear direction) based on the calculated movement dimension. The controller stores the determined movement dimension and the determined rotational speed of the shaft of the first servomotor 34 in the large-capacity hard disk in a state of being associated with the glass plate identification information of the glass plate 11.

As illustrated in Figs. 4 to 6, the loading conveyor 43 is a plurality of endless tracks extending in the front-rear direction (X-axis direction), and is arranged at predetermined intervals in the width direction (Y-axis direction). A control unit that controls start/stop and a conveyance distance of the loading conveyor 43 is connected to the controller via a signal line. The loading conveyor 43 conveys the glass plate 11 in the front-rear direction from the rear end portion toward the front end portion of the loading area 19. The stoppers 44 are provided at the front end portion of the loading area 19 and are spaced apart in the width direction. The front end edge 16 of the glass plate 11 moving forward from the rear end portion toward the front end portion of the loading area 19 by the loading conveyors 43 comes into contact with the stopper 44. A non-contact sensor (not illustrated) is installed behind the stopper 44. The non-contact sensor is connected to the controller, and when detecting the front end edge 16 of the glass plate 11, the movement of the glass plate 11 is decelerated, and the front end edge 16 of the glass plate 11 comes into contact with the stopper 44 for a set time.

The rollers 45 are rotatably attached to a plurality of shafts 49 extending in the front-rear direction, and are installed between the loading conveyors 43 together with the shafts 49. The rollers 45 are arranged at a predetermined distance in the front-rear direction and are arranged at a predetermined distance in the width direction. The rollers 45 rotate clockwise and counterclockwise in the width direction, and come into contact with the lower surface 13 of the glass plate 11 to movably support the glass plate 11 in the width direction. The shafts 49 are attached to a base positioned below the shafts via bearings.

A resistance plate (rubber ring) (not illustrated) that increases the rotation resistance of the roller 45a is attached between the roller 45a of the rollers 45 and the shaft 49. In the roller 45a, resistance with the shaft 49 is increased by the resistance plate, the roller 45a does not rotate unless a rotational force exceeding the rotational resistance is applied to the roller 45a, and free rotation of the roller 45a is prevented by the resistance plate. When the glass plate 11 is placed on the rollers 45, the free movement of the glass plate 11 in the width direction is prevented by the roller 45a having a large rotation resistance.

The roller lifting mechanism 46 is installed below the base to which the shaft 49 is attached, and is arranged side by side at a predetermined distance in the width direction. An air cylinder is used for the roller lifting mechanism 46, and the shafts 49 and the rollers 45 are lifted and lowered in the vertical direction together with the base by the roller lifting mechanism 46 (air cylinder). The ascending dimension and the descending dimension of the roller lifting mechanism 46 are set in advance. A control unit that controls start/stop of the roller lifting mechanism 46 is connected to the controller via a signal line.

While the loading conveyor 43 is conveying the glass plate 11, the rollers 45 (base and shaft 49) are lowered below the loading conveyor 43 by the roller lifting mechanism 46, and the rollers 45 do not come into contact with the lower surface 13 of the glass plate 11. When the rollers 45 are lifted up by the roller lifting mechanism 46, a part of the peripheral portion of the rollers 45 is exposed to the upper side of the loading conveyor 43, and the glass plate 11 is lifted up to the upper side of the loading conveyor 43 by the rollers 45.

The moving mechanism 47 includes a rod 50 positioned above the loading conveyors 43 and the rollers 45, a third servomotor 51 installed on the rod 50, a feed screw (feed screw mechanism) (not illustrated) installed on the rod 50 and connected to a shaft of the third servomotor 51, a moving arm 52 extending downward from the rod 50, and a contact member 53 installed at a lower end portion of the moving arm 52.

The rod 50 is attached to the rear surface of the first pillar 26a and extends in the width direction. The moving arm 52 is movably installed on the feed screw, and linearly moves to one side and the other side in the width direction along the rod 50 by the rotation of the feed screw due to the rotation of the shaft of the third servomotor 51. The contact member 53 linearly moves to one side and the other side in the width direction together with the moving arm 52 along with the movement of the moving arm 52 in the width direction. The contact member 53 comes into contact with the other side edge 15 of the glass plate 11 in a state where the roller 45 raised by the roller lifting mechanism 46 comes into contact with the lower surface 13 of the glass plate 11, and presses the glass plate 11 in the width direction so that the glass plate 11 moves in the width direction. A control unit that controls start/stop, rotational speed, and angular velocity of the third servomotor 51 is connected to the controller via a signal line.

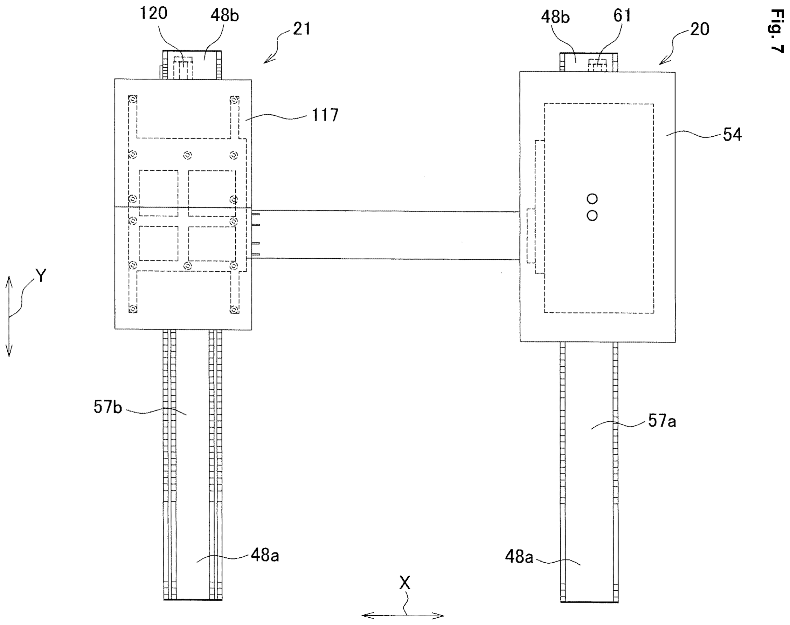

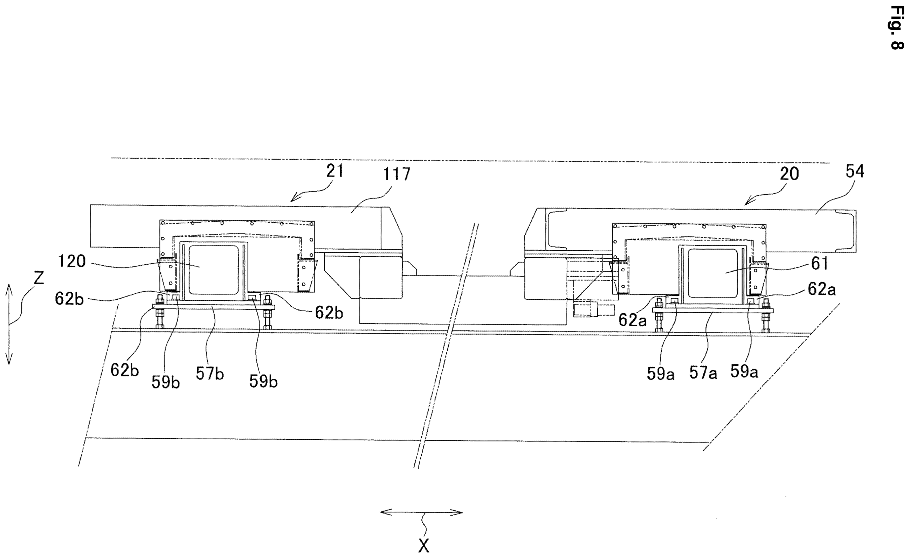

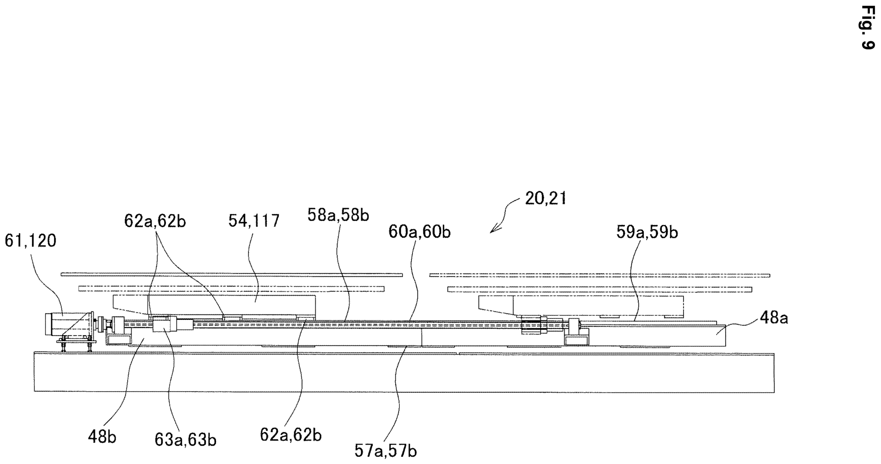

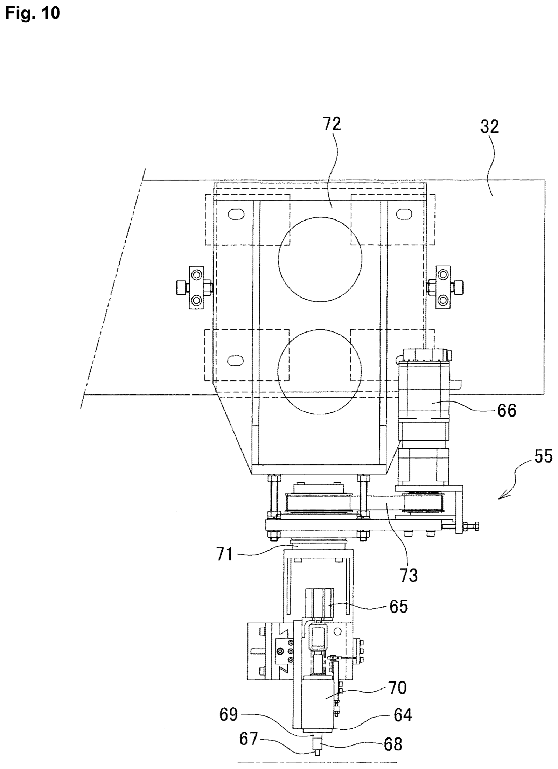

Fig. 7 is a top view of a cutting processing table 54 and a grinding processing table 117, and Fig. 8 is a side view of the cutting processing table 54 and the grinding processing table 117. Fig. 9 is a view for explaining the movement of the cutting processing table 54 and the grinding processing table 117, and Fig. 10 is a side view of the cutting device 55 installed in the cutting processing area 20 as an example. Fig. 11 is a front view of the cutting device 55. In Figs. 7 and 8, the front-rear direction (X-axis direction) is indicated by an arrow X, the width direction (Y-axis direction) is indicated by an arrow Y, and the vertical direction (Z-axis direction) is indicated by an arrow Z.

The cutting processing area 20 includes the cutting processing table 54 (cutting processing table) on which the glass plate 11 positioned in the loading area 19 is placed, and the cutting device 55 (cutting device) that forms an outline cutting line K1 (cut line) in the peripheral area 56b (peripheral portion) of the glass plate 11 placed on the cutting processing table 54.

The cutting processing table 54 is installed on a base lane 57a that is fixed to the floor surface of the machine table 25 and is long in the width direction. The cutting processing table 54 uses the first moving mechanism 58a to move in the width direction in a state where the positioned glass plate 11 is placed. The first moving mechanism 58a includes a traveling guide rail 59a, a feed screw 60a (ball screw), a fourth servomotor 61, a guide shoe 62a, and a slide block 63a (housing nut).

These traveling guide rails 59a are installed on the upper surface of the base lane 57a and extend in the width direction. The feed screw 60a (ball screw) is installed on the upper surface of the base lane 57a and on the side of the traveling guide rail 59a, and extends in the width direction. The fourth servomotor 61 is installed behind the machine table 25 and reciprocates the cutting processing table 54 in the width direction. The other end portion of the feed screw 60a is connected to the shaft of the fourth servomotor 61.

The feed screw 60a is rotatably supported by a bearing (not illustrated) fixed to the base lane 57a. The guide shoe 62a is attached to the lower surface of the cutting processing table 54 and extends in the width direction. The guide shoe 62a is slidably fitted to the traveling guide rail 59a. The slide block 63a (housing nut) is attached to the lower surface of the cutting processing table 54 and between the guide shoes 62a. The slide block 63a is rotatably screwed to the feed screw 60a.

When the shaft of the fourth servomotor 61 rotates in the clockwise direction (rotation direction when the fourth servomotor 61 is viewed from the front), the feed screw 60a rotates in the clockwise direction, whereby the slide block 63a moves the feed screw 60a in the width direction from the second side edge 48b (other side edge) toward the first side edge 48a (one side edge) of the cutting processing area 20, and the cutting processing table 54 moves in the width direction from the second side edge 48b toward the first side edge 48a of the cutting processing area 20 by the movement of the slide block 63a. Conversely, when the shaft of the fourth servomotor 61 rotates in the counterclockwise direction, the feed screw 60a rotates in the counterclockwise direction, so that the slide block 63a moves the feed screw 60a in the width direction from the first side edge 48a (one side edge) toward the second side edge 48b (other side edge) of the cutting processing area 20, and the cutting processing table 54 moves in the width direction from the first side edge 48a toward the second side edge 48b of the cutting processing area 20 by the movement of the slide block 63a.

The cutting device 55 includes a cutting jig 64, an air cylinder 65, and a fifth servomotor 66. The cutting jig 64 includes a cutting cutter wheel 67, a cutting cutter holder 68, a cutter lifting shaft 69, and a cutter lifting guide 70. The cutting cutter wheel 67 is connected to the cutting cutter holder 68 via a bearing (not illustrated), and freely rotates along the axis of the interposed bearing. The cutting cutter wheel 67 forms the outline cutting line K1 in the peripheral area 56b (peripheral portion) of the glass plate 11.

The cutting cutter holder 68 is located immediately above the cutting cutter wheel 67 and connected to the cutter wheel 67 to support the cutter wheel 67. The cutter lifting shaft 69 is positioned directly above the cutting cutter holder 68 and connected to the cutter holder 68 to support the cutter holder 68. The cutter lifting guide 70 is positioned immediately above the cutter lifting shaft 69 and connected to the cutter lifting shaft 69 to support the cutter lifting shaft 69. The cutting jig 64 (including air cylinder 65) is connected to a support shaft 71 that is located immediately above the air cylinder 65 and rotatably supports the cutting jig 64. The support shaft 71 is attached to a bracket 72 located immediately above the support shaft. The bracket 72 is connected to the first moving unit 28 of the conveyance mechanism 24 that moves forward and backward (linearly moves) in the front-rear direction (X-axis direction).

The air cylinder 65 is installed immediately above the cutter lifting shaft 69. The air cylinder 65 lifts and lowers the cutting cutter wheel 67 (cutting cutter holder 68) in the vertical direction (Z-axis direction), and lowers the cutter wheel 67 toward the upper surface 12 of the glass plate 11 to apply a cutting pressure (downward pressing force) to the cutter wheel 67 at the time of forming the outline cutting line K1 (cut line) to the peripheral area 56b of the glass plate 11. The shaft of the fifth servomotor 66 is connected to the support shaft 71 via a timing belt 73. The fifth servomotor 66 adjusts the direction of the cutting direction of the cutting jig 64 (cutting cutter wheel 67) (angle around axis orthogonal to XY plane).

In the cutting device 55, the control unit of the fifth servomotor 66 rotates the shaft of the motor 66 based on the NC control signal transmitted from the controller, NC controls the cutting jig 64 (cutting cutter wheel 67), and the cutting jig 64 forms the outline cutting line K1 according to the shape desired to be processed in the peripheral area 56b (peripheral portion) of the glass plate 11 according to the NC control. A control unit that controls start/stop, rotational speed, and angular velocity of the fourth and fifth servomotors 61 and 66 is connected to the controller via a signal line.

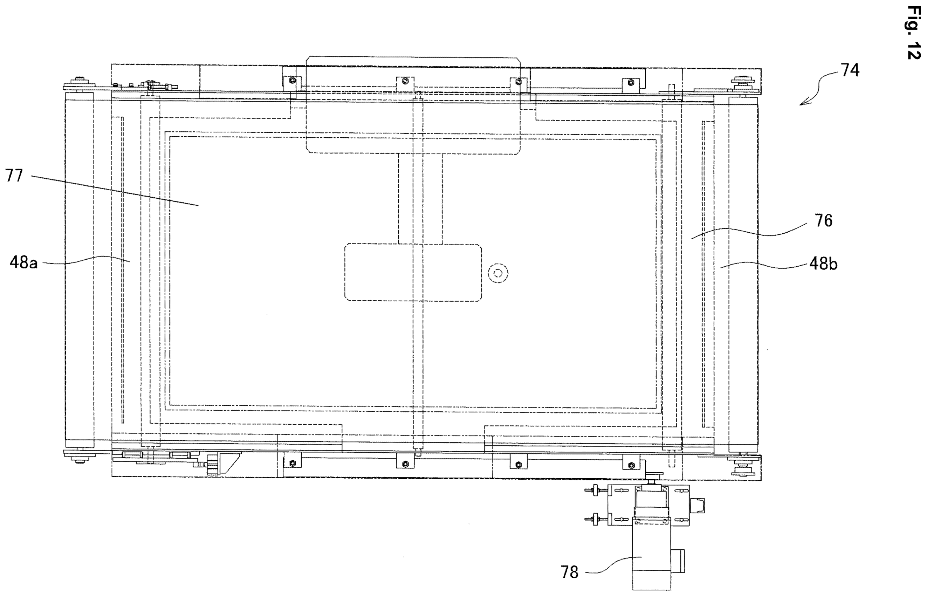

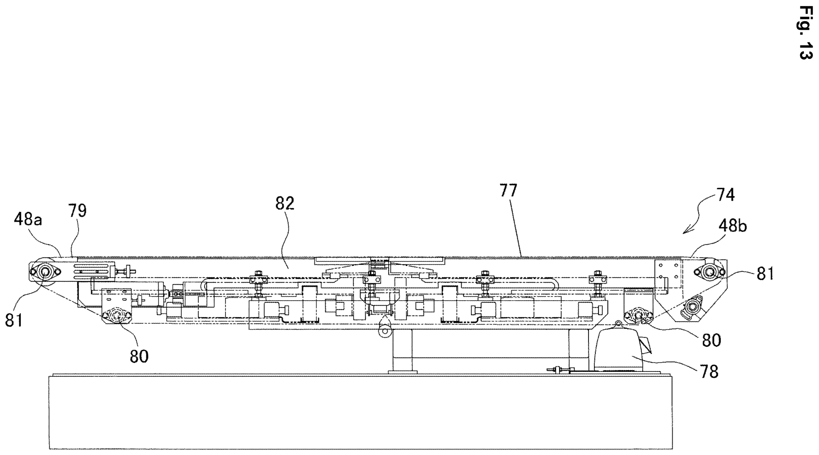

Fig. 12 is a top view of a bend-breaking processing table 74, and Fig. 13 is a side view of the bend-breaking processing table 74. The bend-breaking processing area 21 includes the bend-breaking processing table 74 which is positioned in the loading area 19 and on which the glass plate 11 subjected to cutting processing in the cutting processing area 20 is placed, the bend-breaking device 75 which bend-breaks a peripheral area 56b (peripheral portion) positioned outside an outline cutting line K1 (cutting line) of the glass plate 11 placed on the bend-breaking processing table 74, and a support device 76 which supports the glass plate 11.

The bend-breaking processing table 74 includes a belt conveyor 77 that travels in a width direction (Y-axis direction) and a conveyor drive motor 78 that causes the belt conveyor 77 to travel, and is installed on a base plate fixed to a floor surface of the machine table 25. The belt conveyor 77 includes a belt 79 extending in the width direction, a plurality of pulleys 80 and a carrier roller 81 that support the belt 79, and a conveyor frame 82 that supports the belt 79, the pulleys 80, and the carrier roller 81. The glass plate 11 subjected to the cutting processing is placed on the belt conveyor 77. The belt conveyor 77 conveys the peripheral area 56b of the glass plate 11 bend-broken by the bend-breaking device 75 to the other side (from first side edge 48a to second side edge 48b) in the width direction, and discards the bend-broken peripheral area 56b of the glass plate 11 in a dust box (not illustrated).

The shaft of the conveyor drive motor 78 is connected to the pulley 80 by a timing belt. A control unit that controls start/stop of the conveyor drive motor 78 is connected to the controller via a signal line. The angular velocity (running speed of the belt) of the shaft of the conveyor drive motor 78 is set in advance, and is stored in the large-capacity hard disk of the controller in a state where the angular velocity is associated with identification information of the conveyor drive motor 78. When the shaft of the conveyor drive motor 78 rotates in the clockwise direction, the rotation is transmitted to the pulley 80 via the timing belt, the pulley 80 rotates in the clockwise direction, and the belt 79 travels toward the other side in the width direction by the rotation of the pulley 80.

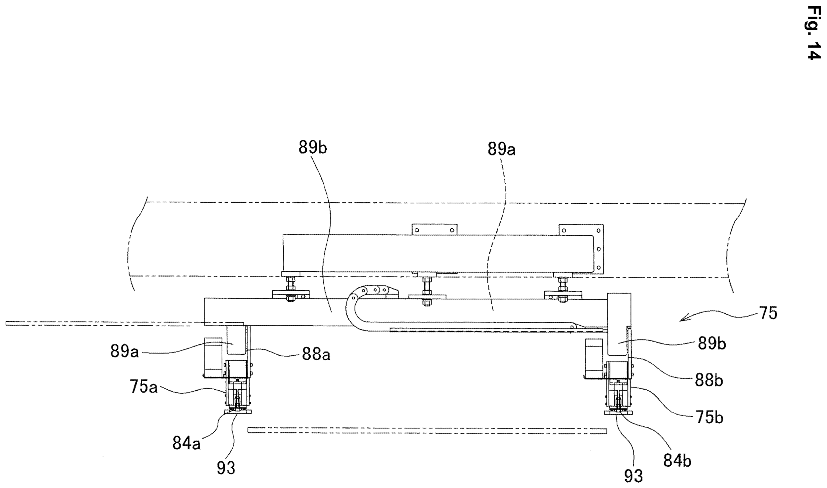

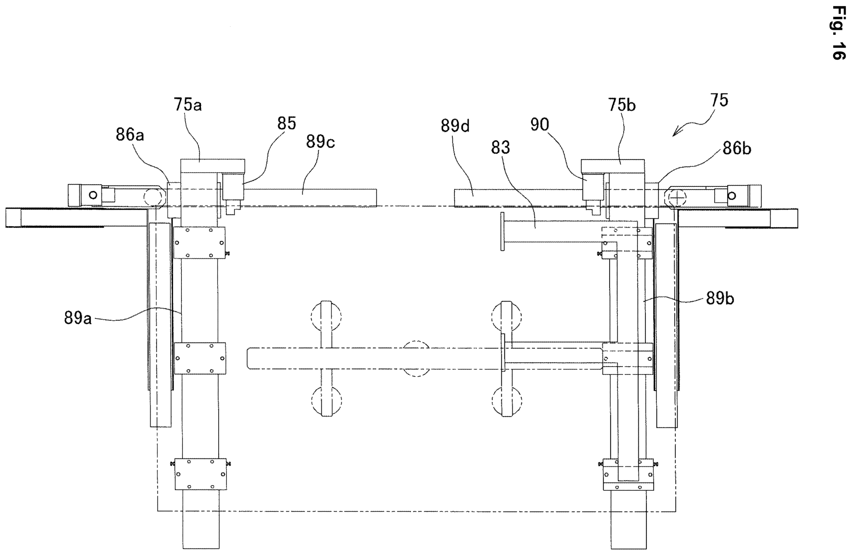

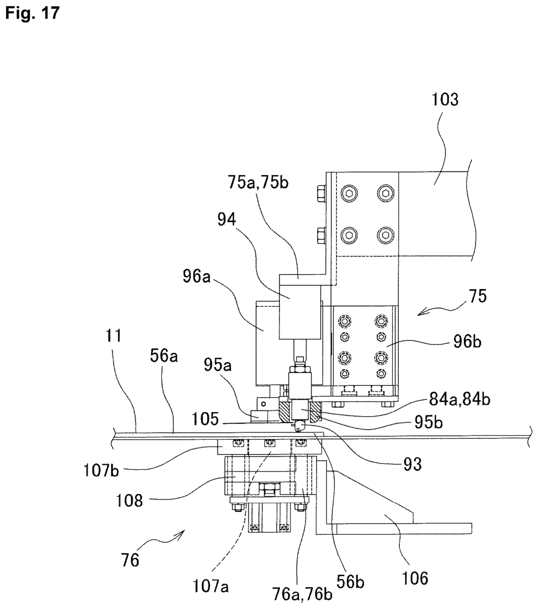

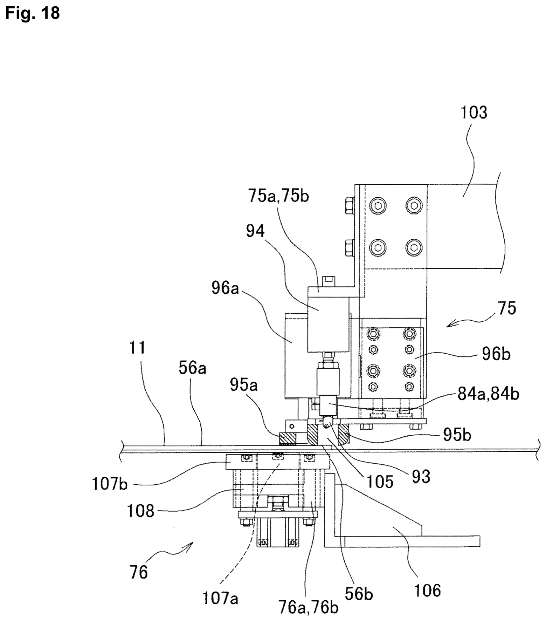

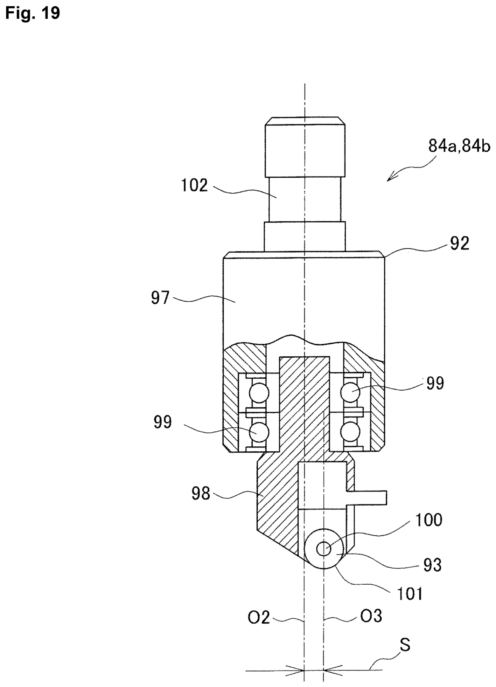

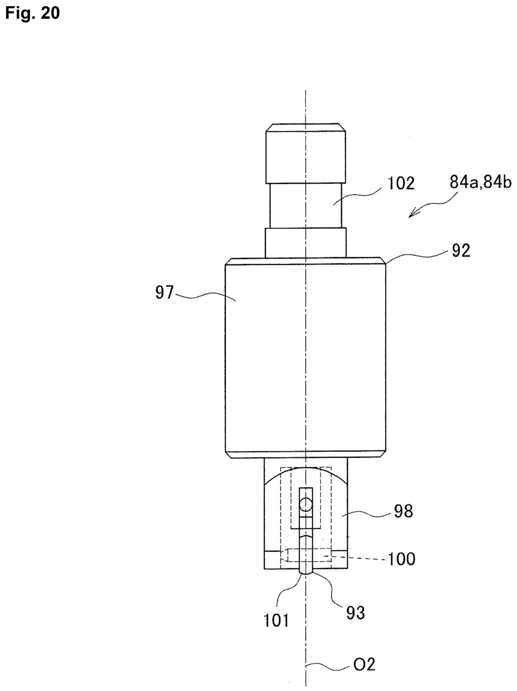

Fig. 14 is a side view of the bend-breaking device 75, and Fig. 15 is a front view of the bend-breaking device 75. Fig. 16 is a top view of the bend-breaking device 75, and Figs. 17 and 18 are enlarged front views of the bend-breaking device 75. Fig. 19 is a partially broken side view of first and second bend-breaking jigs 84a and 84b, and Fig. 20 is a front view of the first and second bend-breaking jigs 84a and 84b. Fig. 17 illustrates a state in which the bend-breaking cutter wheel 93 is lowered and the first and second pressing members 95a and 95b are raised. Fig. 18 illustrates a state in which the bend-breaking cutter wheel 93 is lifted and the first and second pressing members 95a and 95b are lowered.

The bend-breaking device 75 is formed of two first bend-breaking devices 75a and second bend-breaking devices 75b spaced apart in the width direction. The first bend-breaking device 75a is coupled to the first guide frame 30, and the second bend-breaking device 75b is coupled to a suspension frame 83. The suspension frame 83 is connected to a side portion of the second guide frame 35. The first bend-breaking device 75a includes a first bend-breaking jig 84a (bend-breaking jig), a sixth servomotor 85 (X-axis servomotor) and an X-axis first actuator 86a, a seventh servomotor 87 (Y-axis servomotor) and a Y-axis first actuator 88a, and an X-axis first actuator frame 89a and a Y-axis first actuator frame 89c. The X-axis first actuator frame 89a and the Y-axis first actuator frame 89c are connected in series at one end portions thereof.

The second bend-breaking device 75b includes a second bend-breaking jig 84b (bend-breaking jig), an eighth servomotor 90 (X-axis servomotor) and an X-axis second actuator 86b, a ninth servomotor 91 (Y-axis servomotor) and a Y-axis second actuator 88b, and an X-axis second actuator frame 89b and a Y-axis second actuator frame 89d. The X-axis second actuator frame 89b and the Y-axis second actuator frame 89d are connected in series at one end portions thereof.

As illustrated in Figs. 19 and 20, the first and second bend-breaking jigs 84a and 84b include a bend-breaking cutter holder 92, a bend-breaking cutter wheel 93, a holder lifting mechanism 94 (first lifting mechanism), a first pressing member 95a that presses downward a main body portion 56a (glass plate 11 extending inside outline cutting line K1) of the glass plate 11 on which the outline cutting line K1 (cut line) and the scoring line K2 are formed, a second pressing member 95b that presses downward a peripheral area 56b (glass plate 11 extending outside outline cutting line K1) of the glass plate 11 on which the outline cutting line K1 (cut line) and a scoring line K2 are formed, and a first pressing member lifting mechanism 96a (second lifting mechanism), a second pressing member lifting mechanism 96b (second lifting mechanism). The bend-breaking cutter holder 92 is positioned above the bend-breaking cutter wheel 93 and supports the bend-breaking cutter wheel 93. The bend-breaking cutter holder 92 includes a holder main body 97 having a connecting portion, and a holder head 98 attached to a distal end of the holder main body 97.

The bend-breaking cutter wheel 93 forms the scoring line K2 (scribe) in the peripheral area 56b of the glass plate 11 to be processed (peripheral portion of glass plate 11 extending outside outline cutting line K1). The bend-breaking cutter wheel 93 is rotatably (rollably) attached to a distal end of the holder head 98 via a rotation shaft 100, and a peripheral edge 101 thereof rolls about the rotation shaft 100. A cutter wheel axis O3 extending in the vertical direction of the bend-breaking cutter wheel 93 is eccentric (displaced) radially outward with respect to a cutter holder center axis O2 extending in the vertical direction of the bend-breaking cutter holder 92 (holder main body 97). A separation dimension S (eccentric dimension) in the width direction of the cutter wheel axis O3 with respect to the cutter holder center axis O2 is in a range of 0.5 to 2 mm.

The holder head 98 is connected to the holder main body 97 via a bearing 99, freely rotates along the axis of the interposed bearing 99, and is rotatable by 360° in a circumferential direction (θ direction) with respect to the cutter holder center axis O2 of the bend-breaking cutter holder 92. The holder head 98 rotates in the clockwise direction and the counterclockwise direction about the cutter holder center axis O2. When the holder head 98 rotates, the bend-breaking cutter wheel 93 (bend-breaking cutter wheel 93 having cutter wheel axis O3 that is eccentric with respect to cutter holder center axis O2) is rotatable by 360° around the cutter holder center axis O2 with respect to the bend-breaking cutter holder 92. The bend-breaking cutter wheel 93 rotates in the clockwise direction and the counterclockwise direction about the cutter holder center axis O2.

Since the cutter wheel axis O3 of the bend-breaking cutter wheel 93 is eccentric outward in the radial direction with respect to the cutter holder center axis O2, when the first and second bend-breaking jigs 84a and 84b (bend-breaking cutter holder 92) travel (move) on the upper surface 12 of the glass plate 11 in a predetermined direction, the bend-breaking cutter wheel exerts a caster effect in which the rolling (moving) direction of the peripheral edge 101 of the bend-breaking cutter wheel 93 faces the traveling (moving) direction (direction in which virtual scoring line extends) of the first and second bend-breaking jigs 84a and 84b (bend-breaking cutter holder 92).

The holder lifting mechanism 94 (first lifting mechanism) is installed immediately above the holder main body 97, and is connected to the connecting portion 102 of the bend-breaking cutter holder 92 (holder main body 97). The holder lifting mechanism 94 is fixed to a bracket 103 by a fixing member. An air cylinder is used for the holder lifting mechanism 94 (first lifting mechanism). The holder lifting mechanism 94 (air cylinder) lifts and lowers (moves up and down) the bend-breaking cutter holder 92 (bend-breaking cutter wheel 93) of the first and second bend-breaking jigs 84a and 84b in the vertical direction (Z-axis direction). The holder lifting mechanism 94 lowers the cutter wheel 93 toward the upper surface 12 of the glass plate 11 at the time of bend-breaking processing of the peripheral area 56b of the glass plate 11, and applies (applies) an end cutting pressure (downward pressing force) to the cutter wheel 93. The ascending dimension and the descending dimension of the holder lifting mechanism are set in advance.

The first pressing member 95a is made of rubber or synthetic resin having rubber elasticity. The first pressing member 95a is located in the vicinity of the outer side of the second pressing member 95b and extends in the circumferential direction with respect to the second pressing member 95b. The first pressing member 95a has a first pressing surface 104a having a predetermined area in contact with the upper surface 12 of the glass plate 11. The first pressing surface 104a is formed in a semi-annular shape surrounding the second pressing member 95b.

The first pressing member lifting mechanism 96a (second lifting mechanism) is located on the side in the width direction of the first pressing member 95a, and is fixed to the bracket 103 by a fixing member. An air cylinder is used for the first pressing member lifting mechanism 96a. The first pressing member lifting mechanism 96a lifts and lowers (moves up and down) the first pressing member 95a of the first and second bend-breaking jigs 84a and 84b in the vertical direction (Z-axis direction).

The first pressing member lifting mechanism 96a (second lifting mechanism) lowers the first pressing member 95a toward the upper surface 12 of the glass plate 11 at the time of performing the bend-breaking processing on the peripheral area 56b of the glass plate 11, and applies a downward pressing force to the first pressing member 95a. The ascending dimension and the descending dimension of the first pressing member 95a are set in advance. One bracket 103 is slidably attached to the X-axis first actuator frame 89a and the Y-axis first actuator frame 89c.

The second pressing member 95b is made of rubber or synthetic resin having rubber elasticity. The second pressing member 95b is located in the vicinity of the outer side of the bend-breaking cutter wheel 93 and extends in the circumferential direction with respect to the bend-breaking cutter wheel 93. The second pressing member 95b has a second pressing surface 104b having a predetermined area in contact with the upper surface 12 of the glass plate 11. The second pressing surface 104b is formed in an annular shape surrounding the bend-breaking cutter wheel 93. A through hole 105 penetrating in the vertical direction is formed at the center of the second pressing member 95b.

The second pressing member lifting mechanism 96b (third lifting mechanism) is located on the side in the width direction of the second pressing member 95b, and is fixed to the bracket 103 by a fixing member. An air cylinder is used for the second pressing member lifting mechanism 96b. The second pressing member lifting mechanism 96b lifts and lowers (moves up and down) the second pressing member 95b of the first and second bend-breaking jigs 84a and 84b in the vertical direction (Z-axis direction). The second pressing member lifting mechanism 96b (third lifting mechanism) lowers the second pressing member 95b toward the upper surface 12 of the glass plate 11 at the time of performing the bend-breaking processing on the peripheral area 56b of the glass plate 11, and applies a downward pressing force to the second pressing member 95b. The ascending dimension and the descending dimension of the second pressing member 95b are set in advance. The other bracket 103 is slidably attached to the X-axis second actuator frame 89b and the Y-axis second actuator frame 89d.

A control unit that controls start/stop of the holder lifting mechanism 94 (first lifting mechanism), a control unit that controls start/stop of the first pressing member lifting mechanism 96a (second lifting mechanism), and a control unit that controls start/stop of the second pressing member lifting mechanism 96b (third lifting mechanism) are connected to a controller via a signal line. The holder lifting mechanism 94 lifts and lowers the bend-breaking cutter holder 92 (bend-breaking cutter wheel 93). The first pressing member lifting mechanism 96a lifts and lowers the first pressing member 95a. The second pressing member lifting mechanism 96b lifts and lowers the second pressing member 95b.

The sixth servomotor 85 (X-axis servomotor) is installed on the X-axis first actuator frame 89a, and a shaft thereof is connected to the X-axis first actuator 86a. The X-axis first actuator 86a includes a screw portion and a guide portion (not illustrated). When the shaft of the sixth servomotor 85 rotates in the clockwise direction, the screw portion of the X-axis first actuator 86a rotates in the clockwise direction. When the screw portion rotates in the clockwise direction, the first bend-breaking jig 84a of the first bend-breaking device 75a moves forward in the front-rear direction along the X-axis first actuator frame 89a together with the bracket 103. When the shaft of the sixth servomotor 85 rotates in the counterclockwise direction, the screw portion of the X-axis first actuator 86a rotates in the counterclockwise direction. When the screw portion rotates in the counterclockwise direction, the first bend-breaking jig 84a of the first bend-breaking device 75a moves together with the bracket 103 toward the rear side in the front-rear direction along the X-axis first actuator frame 89a.

The seventh servomotor 87 (Y-axis servomotor) is installed on the Y-axis first actuator frame 89c, and the shaft thereof is connected to the Y-axis first actuator 88a. The Y-axis first actuator 88a includes a screw portion and a guide portion (not illustrated). When the shaft of the seventh servomotor 87 rotates in the clockwise direction, the screw portion of the Y-axis first actuator 88a rotates in the clockwise direction. When the screw portion rotates in the clockwise direction, the first bend-breaking jig 84a of the first bend-breaking device 75a moves together with the bracket 103 toward one side in the width direction along the Y-axis first actuator frame 89c. When the shaft of the seventh servomotor 87 rotates in the counterclockwise direction, the screw portion of the Y-axis first actuator 88a rotates in the counterclockwise direction. When the screw portion rotates in the counterclockwise direction, the first bend-breaking jig 84a of the first bend-breaking device 75a moves together with the bracket 103 toward the other side in the width direction along the Y-axis first actuator frame 89c. A control unit that controls start/stop, rotational speed, and angular velocity of the sixth and seventh servomotors 85 and 87 is connected to the controller via a signal line.

The eighth servomotor 90 (X-axis servomotor) is installed on the X-axis second actuator frame 89b, and a shaft thereof is connected to the X-axis second actuator 86b. The X-axis second actuator 86b includes a screw portion and a guide portion (not illustrated). When the shaft of the eighth servomotor 90 rotates in the clockwise direction, the screw portion of the X-axis second actuator 86b rotates in the clockwise direction. When the screw portion rotates in the clockwise direction, the second bend-breaking jig 84b of the second bend-breaking device 75b moves forward in the front-rear direction along the X-axis second actuator frame 89b together with the bracket 103. When the shaft of the eighth servomotor 90 rotates in the counterclockwise direction, the screw portion of the X-axis second actuator 86b rotates in the counterclockwise direction. When the screw portion rotates in the counterclockwise direction, the second bend-breaking jig 84b of the second bend-breaking device 75b moves together with the bracket 103 toward the rear side in the front-rear direction along the X-axis second actuator frame 89b. A control unit that controls start/stop, rotational speed, and angular velocity of the eighth and ninth servomotors 90 and 91 is connected to the controller via a signal line.

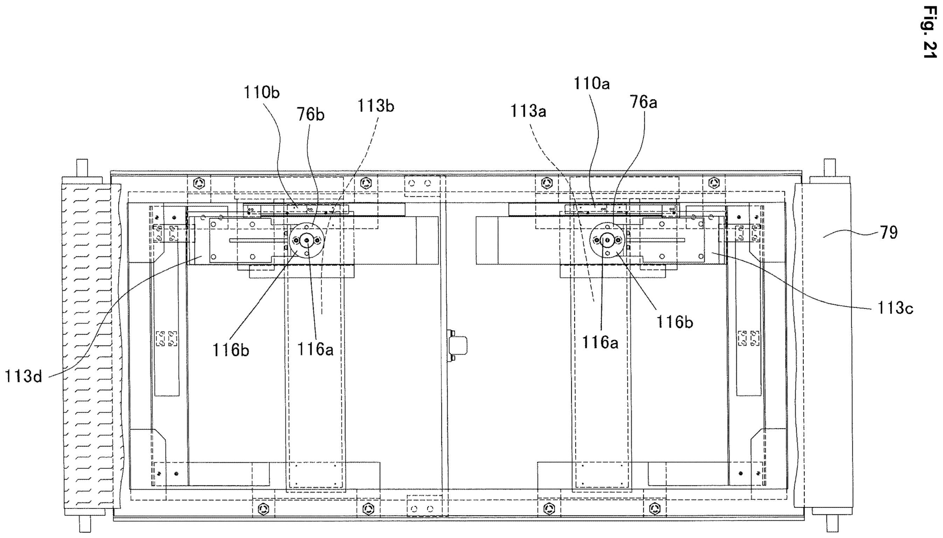

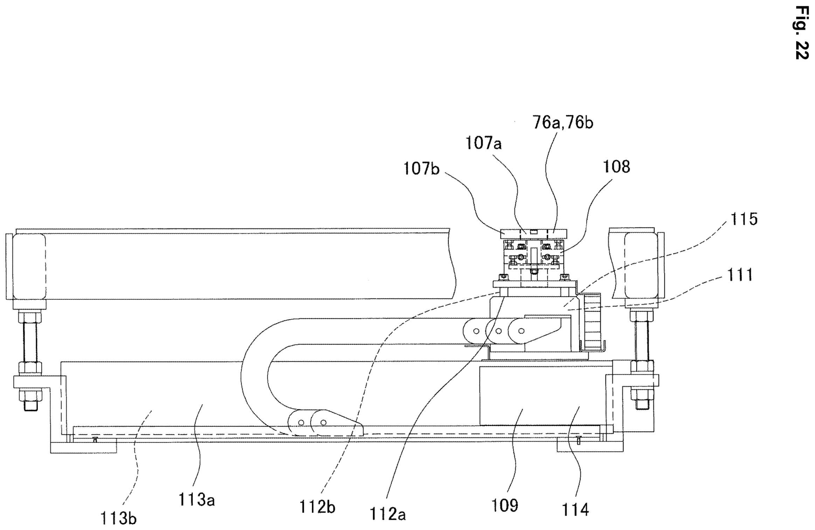

Fig. 21 is a top view of the bend-breaking processing table 74 in which the support device 76 is exposed, and Fig. 22 is a front view of the bend-breaking processing table 74 in which the support device 76 is viewed from the front. The support device 76 is formed of two first support devices 76a and second support device 76b separated in the width direction. The first and second support devices 76a and 76b are coupled to a guide frame 106.

The first support device 76a includes a first support member 107a and a second support member 107b, a second support member lifting mechanism 108 (fourth lifting mechanism) that lifts and lowers the second support member 107b in the vertical direction, a tenth servomotor 109 (X-axis servomotor) and an X-axis third actuator 110a, a eleventh servomotor 111 (Y-axis servomotor) and a Y-axis third actuator 112a, and an X-axis third actuator frame 113a and a Y-axis third actuator frame 113c.

The second support device 76b includes a first support member 107a and a second support member 107b, a second support member lifting mechanism 108 (fourth lifting mechanism) that lifts and lowers the second support member 107b in the vertical direction, a twelfth servomotor 114 (X-axis servomotor) and an X-axis fourth actuator 110b, a thirteenth servomotor 115 (Y-axis servomotor) and a Y-axis fourth actuator 112b, and an X-axis fourth actuator frame 113b and a Y-axis fourth actuator frame 113d.

The first support member 107a is located radially inward of the second support member 107b and has a first support surface 116a having a predetermined area for supporting the lower surface 13 of the glass plate 11. The first support surface 116a is formed in a flat perfect circular shape. The second support member 107b is located radially outward of the first support member 107a and has a second support surface 116b having a predetermined area for supporting the lower surface 13 of the glass plate 11. The second support surface 116b is formed in a flat annular shape surrounding the first support member 107a (first support surface 116a).

The second support member lifting mechanism 108 (fourth lifting mechanism) is located immediately below the second support member 107b, and is fixed to the guide frame 106 by a fixing member. An air cylinder is used for the second support member lifting mechanism 108. The second support member lifting mechanism 108 (air cylinder) lifts and lowers (moves up and down) the second support member 107b of the first and second support devices 76a and 76b in the vertical direction (Z-axis direction). The second support member lifting mechanism 108 lowers the second support member 107b from the lower surface 13 of the glass plate 11 at the time of bend-breaking the peripheral area 56b of the glass plate 11, and forms a gap (step between first support surface 116a and second support surface 116b) between the lower surface 13 of the glass plate 11 and the second support surface 116b. The descending dimension of the second support member 107b is set in advance. A control unit that controls start/stop of the second support member lifting mechanism 108 (fourth lifting mechanism) is connected to the controller via a signal line.

The tenth servomotor 109 (X-axis servomotor) is installed on the X-axis third actuator frame 113a, and a shaft thereof is connected to the X-axis third actuator 110a. The X-axis third actuator 110a includes a screw portion and a guide portion (not illustrated). When the shaft of the tenth servomotor 109 rotates in the clockwise direction, the screw portion of the X-axis third actuator 110a rotates in the clockwise direction. When the screw portion rotates in the clockwise direction, the first support device 76a moves forward in the front-rear direction along the X-axis third actuator frame 113a together with the guide frame 106. When the shaft of the tenth servomotor 109 rotates in the counterclockwise direction, the screw portion of the X-axis third actuator 110a rotates in the counterclockwise direction, and when the screw portion rotates in the counterclockwise direction, the first support device 76a together with the guide frame 106 moves rearward in the front-rear direction along the X-axis third actuator frame 113a.

The eleventh servomotor 111 (Y-axis servomotor) is installed on the Y-axis third actuator frame 113c, and a shaft thereof is connected to the Y-axis third actuator 112a. The Y-axis third actuator 112a includes a screw portion and a guide portion (not illustrated). When the shaft of the eleventh servomotor 111 rotates in the clockwise direction, the screw portion of the 0Y-axis third actuator 112a rotates in the clockwise direction. When the screw portion rotates in the clockwise direction, the first support device 76a moves together with the guide frame 106 toward one side in the width direction along the Y-axis third actuator frame 113c. When the shaft of the eleventh servomotor 111 rotates in the counterclockwise direction, the screw portion of the Y-axis third actuator 112a rotates in the counterclockwise direction. When the screw portion rotates in the counterclockwise direction, the first support device 76a moves together with the guide frame 106 toward the other side in the width direction along the Y-axis third actuator frame 113c. The first support device 76a moves in the front-rear direction and the width direction (horizontal direction) in synchronization with the first bend-breaking device 75a (first bend-breaking jig 84a). A control unit that controls start/stop, rotational speed, and angular velocity of the tenth and eleventh servomotors 109 and 111 is connected to the controller via a signal line.

The twelfth servomotor 114 (X-axis servomotor) is installed on the X-axis fourth actuator frame 113b, and a shaft thereof is connected to the X-axis fourth actuator 110b. The X-axis fourth actuator 110b includes a screw portion and a guide portion (not illustrated). When the shaft of the twelfth servomotor 114 rotates in the clockwise direction, the screw portion of the X-axis fourth actuator 110b rotates in the clockwise direction. When the screw portion rotates in the clockwise direction, the second support device 76b together with the guide frame 106 move forward in the front-rear direction along the X-axis fourth actuator frame 113b. When the shaft of the twelfth servomotor 114 rotates in the counterclockwise direction, the screw portion of the X-axis fourth actuator 110b rotates in the counterclockwise direction. When the screw portion rotates in the counterclockwise direction, the second support device 76b together with the guide frame 106 moves rearward in the front-rear direction along the X-axis fourth actuator frame 113b.

The thirteenth servomotor 115 (Y-axis servomotor) is installed on the Y-axis fourth actuator frame 113d, and a shaft thereof is connected to the Y-axis fourth actuator 112b. The Y-axis fourth actuator 112b includes a screw portion and a guide portion (not illustrated). When the shaft of the thirteenth servomotor 115 rotates in the clockwise direction, the screw portion of the Y-axis fourth actuator 112b rotates in the clockwise direction. When the screw portion rotates in the clockwise direction, the second support device 76b together with the guide frame 106 moves toward one side in the width direction along the Y-axis fourth actuator frame 113d. When the shaft of the thirteenth servomotor 115 rotates in the counterclockwise direction, the screw portion of the Y-axis fourth actuator 112b rotates in the counterclockwise direction. When the screw portion rotates in the counterclockwise direction, the second support device 76b moves together with the guide frame 106 toward the other side in the width direction along the Y-axis fourth actuator frame 113d. The second support device 76b moves in the front-rear direction and the width direction (horizontal direction) in synchronization with the second bend-breaking device 75b (second bend-breaking jig 84b). A control unit that controls start/stop, rotational speed, and angular velocity of the twelfth and thirteenth servomotors 114 and 115 is connected to the controller via a signal line.

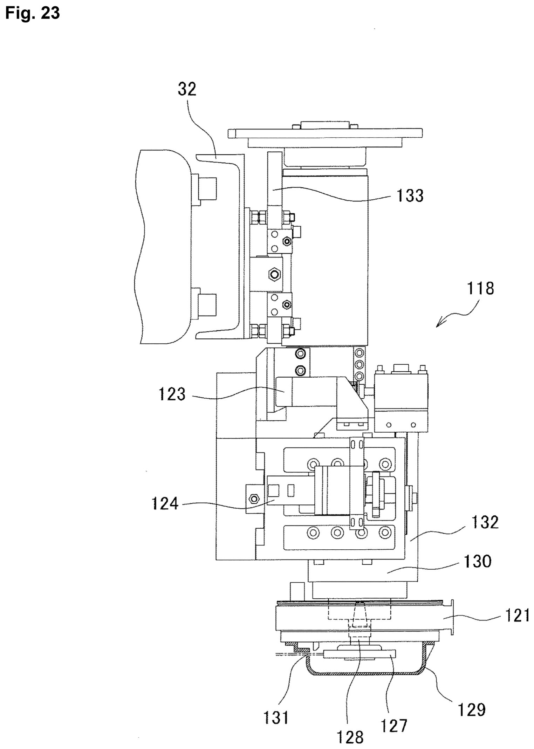

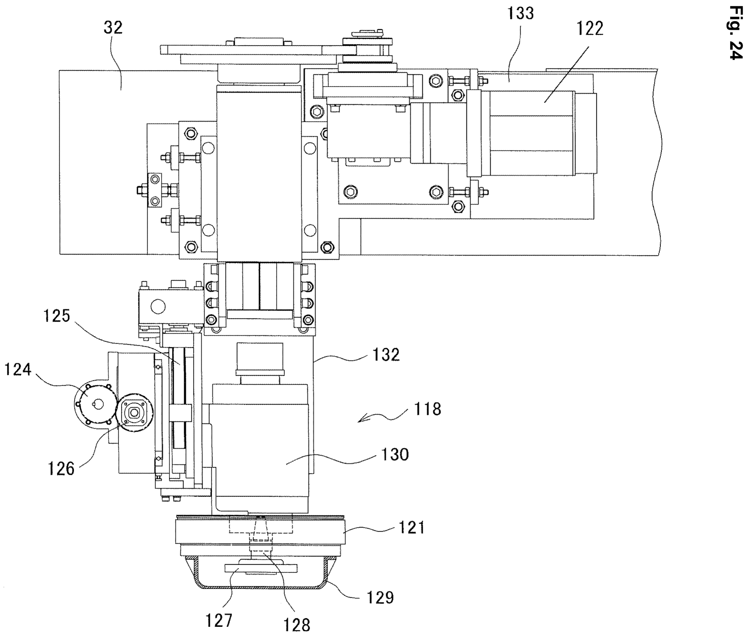

Fig. 23 is a front view of the grinding device 118 illustrated as an example installed in the grinding processing area 22, and Fig. 24 is a side view of the grinding device 118. The grinding processing area 22 includes the grinding processing table 117 (grinding processing table) that is positioned in the loading area 19, performs cutting processing in the cutting processing area 20, and places the glass plate 11 subjected to bend-breaking processing in the bend-breaking processing area 21, and the grinding device 118 that grinds an edge (peripheral edge) of the main body portion 56a of the glass plate 11 placed on the grinding processing table 117.

The grinding processing table 117 is installed on a base lane 57b which is fixed to the floor surface of the machine table 25 and is long in the width direction (see Fig. 7). The grinding processing table 117 includes a plurality of suction pads 119 that suck and hold the glass plate 11, and a vacuum mechanism (air vacuum pump) (not illustrated) that applies a suction force to the suction pad 119 by setting the suction pad 119 to a negative pressure. A control unit that controls start/stop of the vacuum mechanism is connected to the controller via a signal line.

The grinding processing table 117 moves in the width direction using the second moving mechanism 58b in a state where the positioned glass plate 11 is placed. The second moving mechanism 58b includes a traveling guide rail 59b, a feed screw 60b (ball screw), a fourteenth servomotor 120, a guide shoe 62b, and a slide block 63b (housing nut). The traveling guide rails 59b are installed on the upper surface of the base lane 57b and extend in the width direction. The feed screw 60b (ball screw) is installed on the upper surface of the base lane 57b and on the side of the traveling guide rail 59b, and extends in the width direction. The fourteenth servomotor 120 is installed in the base lane 57b and reciprocates the grinding processing table 117 in the width direction. The other end portion of the feed screw 60b is connected to the shaft of the fourteenth servomotor 120. A control unit that controls start/stop, rotational speed, and angular velocity of the fourteenth servomotor 120 is connected to the controller via a signal line.

The feed screw 60b is rotatably supported by a bearing (not illustrated) fixed to the base lane 57b. The guide shoe 62b is attached to the lower surface of the grinding processing table 117 and extends in the width direction. The guide shoe 62b is slidably fitted to the traveling guide rail 59b. The slide block 63b (housing nut) is attached to the lower surface of the grinding processing table 117 and between the guide shoes 62b. The slide block 63b is rotatably screwed to the feed screw 60b.

When the shaft of the fourteenth servomotor 120 rotates in the clockwise direction, the feed screw 60b rotates in the clockwise direction, so that the slide block 63b moves in the width direction of the feed screw 60b from the other side edge 48b of the grinding processing area 22 toward the one side edge 48a, and the movement of the slide block 63b moves the grinding processing table 117 in the width direction from the other side edge 48b of the grinding processing area 22 toward the one side edge 48a. When the shaft of the fourteenth servomotor 120 rotates in the counterclockwise direction, the feed screw 60b rotates in the counterclockwise direction, so that the slide block 63b moves in the width direction of the feed screw 60b from one side edge 48a toward the other side edge 48b of the grinding processing area 22, and the movement of the slide block 63b moves the grinding processing table 117 in the width direction from one side edge 48a toward the other side edge 48b of the grinding processing area 22.

Note that the fourteenth servomotor 120 is driven in synchronization with the fourth servomotor 61 in the cutting processing area 20, and the grinding processing table 117 moves from the other side edge 48b to the one side edge 48a of the grinding processing area 22 in synchronization with the movement from the other side edge 48b to the one side edge 48a of the cutting processing area 20 of the cutting processing table 54, or the grinding processing table 117 moves from the one side edge 48a to the other side edge 48b of the grinding processing area 22 of the grinding processing table 117 in synchronization with the movement from the one side edge 48a to the other side edge 48b of the cutting processing area 20 of the cutting processing table 54.

The grinding device 118 includes a grinding jig 121, a fifteenth servomotor 122 (grinding Z-axis servomotor), a sixteenth servomotor 123 (lifting servomotor), a seventeenth servomotor 124 (cutting servomotor), a grinding wheel lifting screw 125, and a grinding wheel cutting screw 126. The grinding jig 121 includes a grinding wheel 127, a grinding holder 128, a cover 129, and a spindle motor 130. The grinding wheel 127 is formed in a disk shape having a predetermined diameter, and grinds an edge (peripheral edge) of the main body portion 56a of the glass plate 11 by an outer peripheral surface thereof.

The grinding holder 128 is located immediately above the grinding wheel 127 and rotatably supports the grinding wheel 127. The cover 129 is located immediately below the grinding wheel 127 and covers the entire grinding wheel 127. The cover 129 is detachably attached to the grinding jig 121. A slit 131 into which the edge (peripheral edge) of the main body portion 56a of the glass plate 11 is inserted is formed in the cover 129. The spindle motor 130 is located immediately above the grinding wheel 127 (grinding holder 128), and is installed and housed in a motor housing 132. The spindle motor 130 has a shaft connected to the center of the grinding wheel 127. The rotation of the shaft of the spindle motor 130 rotates the grinding wheel 127. The motor housing 132 is fixed to the traveling frame 32 via a bracket 133. A control unit that controls start/stop, rotational speed, and angular velocity of the spindle motor 130 is connected to the controller via a signal line.

The fifteenth servomotor 122 (grinding Z-axis servomotor) is located in the vicinity of the rear of the grinding jig 121, and is coupled and fixed to the traveling frame 32 via the bracket 133. The shaft of the fifteenth servomotor 122 is connected to a support shaft of the motor housing 132. The fifteenth servomotor 122 finely adjusts the posture (angle around axis) of the grinding wheel 127 in the axial direction such that the outer peripheral surface of the grinding wheel 127 comes into contact with the edge (peripheral edge) of the main body portion 56a of the glass plate 11 in parallel.

The sixteenth servomotor 123 (lifting servomotor) is located in the vicinity of the outer side in the width direction of the motor housing 132 (spindle motor 130), and is coupled and fixed to the motor housing 132. The shaft of the sixteenth servomotor 123 is connected to the grinding wheel lifting screw 125, and rotates the grinding wheel lifting screw 125. The sixteenth servomotor 123 vertically moves the grinding wheel 127 (motor housing 132) according to the thickness dimension of the glass plate 11, and finely adjusts the height of the grinding wheel 127 such that the height of the grinding wheel 127 matches the height of the edge of the main body portion 56a of the glass plate 11 and the outer peripheral surface of the grinding wheel 127 comes into contact with the edge of the main body portion 56a of the glass plate 11.

In the initial setting for starting processing of the glass plate 11, a distance from an attachment reference surface of the grinding wheel 127 to the center of a groove is input to the controller. The controller calculates the rotational speed of the shaft of the sixteenth servomotor 123 based on the input distance, and transmits the calculated rotational speed to the control unit of the sixteenth servomotor 123. The control unit of the sixteenth servomotor 123 rotates the shaft of the sixteenth servomotor 123 at the rotational speed received from the controller. When the shaft of the sixteenth servomotor 123 rotates in the clockwise direction at a predetermined rotational speed, the grinding wheel lifting screw 125 rotates in the clockwise direction and the screw 125 descends, whereby the grinding wheel 127 (motor housing 132) descends. When the shaft of the sixteenth servomotor 123 rotates in the counterclockwise direction at a predetermined rotational speed, the grinding wheel lifting screw 125 rotates in the counterclockwise direction and the screw 125 rises, whereby the grinding wheel 127 (motor housing 132) rises. As long as the thickness dimension of the glass plate 11 to be processed is the same, once fine adjustment of the height of the grinding wheel 127 is set, no subsequent adjustment is performed.

The seventeenth servomotor 124 (cutting servomotor) is located immediately below the sixteenth servomotor 123 (lifting servomotor) and in the vicinity of the outer side of the motor housing 132 (spindle motor 130) in the width direction, and is coupled and fixed to the motor housing 132. The shaft of the seventeenth servomotor 124 is connected to the grinding wheel cutting screw 126, and rotates the grinding wheel cutting screw 126. The seventeenth servomotor 124 moves the grinding wheel 127 (motor housing 132) in the width direction according to the outer peripheral surface diameter of the grinding wheel 127, and finely adjusts the cutting depth of the grinding wheel 127 such that the outer peripheral surface of the grinding wheel 127 comes into contact with the edge (peripheral edge) of the main body portion 56a of the glass plate 11. A control unit that controls start/stop, rotational speed, and angular velocity of each of the fifteenth to seventeenth servomotors 122 to 124 is connected to the controller via a signal line.

In the initial setting for starting processing of the glass plate 11, a diameter of the grinding wheel 127 is input to the controller. The controller calculates the rotational speed of the shaft of the seventeenth servomotor 124 based on the input diameter of the grinding wheel 127, and transmits the calculated rotational speed to the control unit of the seventeenth servomotor 124. The control unit of the seventeenth servomotor 124 rotates the shaft of the seventeenth servomotor 124 at the rotational speed received from the controller. When the shaft of the seventeenth servomotor 124 rotates clockwise at a predetermined rotational speed, the grinding wheel cutting screw 126 rotates clockwise and the screw 126 moves rearward in the front-rear direction, whereby the grinding wheel 127 (motor housing 132) moves rearward in the front-rear direction. When the shaft of the seventeenth servomotor 124 rotates counterclockwise at a predetermined rotational speed, the grinding wheel cutting screw 126 rotates counterclockwise and the screw 126 moves forward in the front-rear direction, whereby the grinding wheel 127 (motor housing 132) moves forward in the front-rear direction. As long as the diameter of the grinding wheel 127 is the same, once fine adjustment of the position of the grinding wheel 127 in the front-rear direction is set, no subsequent adjustment is performed.

In the unloading area 23, an unloading conveyor 134 is installed. The unloading area 23 is supported by legs extending upward from a floor surface of the machine table 25. The unloading conveyors 134 are a plurality of endless tracks extending in the front-rear direction (X direction), and are arranged at predetermined intervals in the width direction (Y direction). A control unit that controls start/stop and a conveyance distance of the unloading conveyor 134 is connected to the controller via a signal line. The unloading conveyor 134 conveys the glass plate 11 in the front-rear direction from the rear end portion toward the front end portion of the unloading area 23.

Hereinafter, an example of processing (cutting processing, bend-breaking processing, and grinding processing) of the glass plate 11 will be described. At the start of processing, the glass plate first holder 40a stands by above the loading area 19, the glass plate second holder 40b stands by above the cutting processing area 20, the glass plate third holder 40c stands by above the bend-breaking processing area 21, and the glass plate fourth holder 40d stands by above the grinding processing area 22.

A plurality of various glass plate images are displayed (output) on a touch panel (output device) connected to the controller. A specific glass plate 11 to be processed is clicked (tapped) (selected) from the plurality of various glass plate images displayed on the touch panel. When the specific glass plate 11 is selected, the controller selects an NC control program for processing to be performed on the glass plate 11. The controller displays an input area of a distance from the attachment reference surface of the grinding wheel 127 to the center of the groove, a dimension input area of the glass plate 11 in the front-rear direction, and a diameter input area of the grinding wheel 127 on the touch panel.

After inputting the distance in the input area of the distance from the attachment reference surface of the grinding wheel 127 to the center of the groove and inputting the diameter in the diameter input area of the grinding wheel 127, an input button displayed on the touch panel is clicked (tapped). When the distance and the diameter are input, the controller drives the sixteenth servomotor 123 to move the grinding wheel 127 (motor housing 132) up and down to finely adjust the height of the grinding wheel 127, and drives the seventeenth servomotor 124 to move the grinding wheel 127 (motor housing 132) in the width direction to finely adjust the position of the grinding wheel 127 in the front-rear direction. After the fine adjustment is completed, the controller outputs (displays) a processing start button to the output device. When the processing start button is clicked (tapped), the processing of the glass plate 11 is started.

The glass plate 11 of the selected processing target (before processing) is brought into the loading area 19. In the loading area 19, a first positioning means and a second positioning means are performed. The glass plate 11 to be processed is automatically supplied to the loading conveyor 43 in the loading area 19 by an automatic supply device (not illustrated). In the automatic supply device, a plurality of glass plates 11 to be processed having the same areas (same size) of the upper surface 12 and the lower surface 13 are stacked in the vertical direction, and the glass plates 11 are supplied from the automatic supply device to the loading conveyor 43 one by one.

An example of a procedure for positioning the glass plate 11 in the loading area 19 is as follows. The controller transmits a conveyance signal (ON signal) to the control unit of the loading conveyor 43, and the control unit of the loading conveyor 43 that has received the conveyance signal drives the loading conveyors 43. The glass plate 11 brought into the loading area 19 is placed on the loading conveyor 43 with its lower surface 13 in contact with the loading conveyor 43. The first side edge 14 (one side edge 14) of the glass plate 11 is parallel to one side edge 48a of the loading area 19, and the other side edge 15 is parallel to the other side edge 48b of the loading area 19.

The glass plate 11 placed on the loading conveyor 43 gradually moves from the rear to the front of the loading area 19 by the loading conveyor 43. When the non-contact sensor installed behind the stopper 44 detects the front end edge 16 of the glass plate 11, a detection signal is transmitted to the controller, and the controller transmits a deceleration signal to the control unit of the loading conveyor 43. After the control unit of the loading conveyor 43 that has received the deceleration signal decelerates the loading conveyor 43, the front end edge 16 of the glass plate 11 comes into contact with the stopper 44.

Next, the controller transmits a stop signal (OFF signal) to the control unit of the loading conveyor 43, and the control unit of the loading conveyor 43 that has received the stop signal stops the driving of the loading conveyor 43. The controller transmits, to the control unit of the loading conveyor 43, the second movement dimension of the loading conveyor 43 to the rear side in the front-rear direction for positioning the front-rear direction center O1 of the first side edge 14 of the glass plate 11 at the positioning second reference L2 of the loading area 19, and transmits a reverse signal (ON signal) to the control unit of the loading conveyor 43.

The control unit of the loading conveyor 43 that has received the second movement dimension and the reverse signal drives the loading conveyor 43 to move the glass plate 11 rearward in the front-rear direction by the second movement dimension by the loading conveyor 43. When the loading conveyor 43 moves the glass plate 11 rearward in the front-rear direction by the second movement dimension, the front-rear direction center O1 of one side edge in the width direction of the glass plate 11 is located at the positioning second reference L2 in the loading area 19 (second positioning means).

After moving the glass plate 11 backward in the front-rear direction by the second movement dimension, the controller transmits a stop signal (OFF signal) to the control unit of the loading conveyor 43, and the control unit of the loading conveyor 43 that has received the stop signal stops driving of the loading conveyor 43. Next, the controller transmits a raising signal (ON signal) to the control unit of the roller lifting mechanism 46. The control unit of the roller lifting mechanism 46 that has received the raising signal raises the roller lifting mechanism 46. The rollers 45 are raised by raising of the roller lifting mechanism 46, a part of the peripheral portion of the rollers 45 is exposed to the upper side of the loading conveyor 43, and the rollers 45 lifts the glass plate 11 to the upper side of the loading conveyor 43 in a state where the raised rollers 45 come into contact with the lower surface 13 of the glass plate 11.

After the raising of the roller lifting mechanism 46 is completed, the controller transmits the rotational speed of the third servomotor 51 calculated from the first movement dimension (first movement distance) in the width direction of the moving mechanism 47 for positioning the first side edge 14 of the glass plate 11 to the positioning first reference L1 to the control unit of the motor 51, and transmits a forward rotation signal (ON signal) to the control unit of the third servomotor 51. The control unit that has received the rotational speed of the third servomotor 51 and the forward rotation signal drives the third servomotor 51 to rotate the shaft of the motor 51 clockwise by a predetermined rotational speed.

The rotation of the feed screw by the rotation of the shaft of the third servomotor 51 in the clockwise direction gradually moves the contact member 53 together with the moving arm 52 from the movement start point to one side in the width direction. The contact member 53 moving in one direction in the width direction comes into contact with the second side edge 15 of the glass plate 11, and the contact member 53 presses the second side edge 15 of the glass plate 11 in the width direction so as to move the glass plate 11 from the other side to the one side in the width direction. The glass plate 11 pressed by the contact member 53 moves on the roller 45 in the width direction from the other side toward one side in the width direction, and the outermost edge located on the outermost side in the width direction among the first side edges 14 of the glass plate 11 in the width direction is located at the positioning first reference L1 in the loading area 19 (first positioning means).

When the movement of the contact member 53 in one direction in the width direction is finished and the outermost edge located on the outermost side in the width direction among the first side edges 14 in the width direction of the glass plate 11 is located at the positioning first reference L1 in the loading area 19, the controller transmits a stop signal (OFF signal) to the control unit of the third servomotor 51. The control unit of the third servomotor 51 that has received the stop signal stops driving of the third servomotor 51. After the third servomotor 51 stops being driven, the controller transmits a reverse rotation signal (ON signal) to the control unit of the third servomotor 51. The control unit of the third servomotor 51 that has received the reverse rotation signal drives the third servomotor 51 to rotate the axis of the third servomotor 51 counterclockwise by a predetermined rotational speed.

Due to the rotation of the feed screw by the rotation of the shaft of the third servomotor 51 in the counterclockwise direction, the contact member 53 gradually moves to the other side in the width direction together with the moving arm 52, and the contact member 53 returns to the movement start point. After the contact member 53 returns to the movement start point, the controller transmits a stop signal (OFF signal) to the controller of the third servomotor 51, and transmits a lowering signal (ON signal) to the control unit of the roller lifting mechanism 46. The control unit of the third servomotor 51 that has received the stop signal stops the driving of the third servomotor 51, and the control unit of the roller lifting mechanism 46 that has received the lowering signal lowers the roller lifting mechanism 46. When the roller lifting mechanism 46 descends, the lower surface 13 of the glass plate 11 positioned by the first positioning means and the second positioning means comes into contact with the loading conveyor 43.

After the positioning of the glass plate 11 is completed by the first positioning means and the second positioning means, the controller transmits a lowering signal (ON signal) to the control unit of the lifting mechanism of the glass plate first holder 40a. The control unit of the lifting mechanism that has received the lowering signal lowers the suction pad 42 toward the upper surface 12 of the glass plate 11 by the lifting mechanism. After the suction pad 42 of the glass plate first holder 40a comes into contact with the upper surface 12 of the glass plate 11, the controller transmits a suction signal (ON signal) to the control unit of the vacuum mechanism of the glass plate first holder 40a. The control unit of the vacuum mechanism that has received the suction signal activates the vacuum mechanism.

When the vacuum mechanism is activated, the glass plate 11 located in the loading area 19 is sucked by the suction pad 42. The controller transmits a rising signal (ON signal) to the control unit of the pad lifting mechanism of glass plate first holder 40a. The control unit of the pad lifting mechanism that has received the raising signal raises the suction pad 42 by the pad lifting mechanism. The glass plate 11 positioned by the first positioning means and the second positioning means in the loading area 19 rises together with the suction pad 42 in a state of being sucked by the suction pad 42.

After the suction pad 42 (glass plate 11) rises, the controller transmits a forward signal (ON signal) to the control unit of the second servomotor 39. The control unit of the second servomotor 39 that has received the forward signal drives the second servomotor 39. The rotation of the axis of the second servomotor 39 moves the slide block in the front-rear direction from the rear side toward the front side of the second guide frame 35, whereby the glass plate first holder 40a (glass plate 11 sucked by suction pad 42) moves from the loading area 19 to the cutting processing area 20 (glass plate moving means). The movement of the slide block causes the glass plate first holder 40a and the glass plate second to fourth holders 40b to 40d to move forward in the front-rear direction.

After the glass plate first holder 40a moves to the cutting processing area 20, the controller transmits a lowering signal (ON signal) to the control unit of the pad lifting mechanism of the glass plate first holder 40a. The control unit of the pad lifting mechanism that has received the lowering signal lowers the suction pad 42 (glass plate 11) onto the cutting processing table 54 in the cutting processing area 20 by the pad lifting mechanism. After the glass plate 11 attached to the suction pad 42 of the glass plate first holder 40a comes into contact with the cutting processing table 54, the controller transmits a stop signal (OFF signal) to the control unit of the vacuum mechanism of the glass plate first holder 40a. The control unit of the vacuum mechanism that has received the stop signal stops the activation of the vacuum mechanism. When the vacuum mechanism stops, the attachment of the suction pad 42 to the glass plate 11 is released, and the positioned glass plate 11 is placed on the cutting processing table 54.

Next, the controller transmits a raising signal (ON signal) to the control unit of the pad lifting mechanism of the glass plate first holder 40a, and the glass plate first holder 40a (pad lifting mechanism) is raised above the cutting processing table 54 by the raising signal. After the glass plate first holder 40a rises, a reverse signal (ON signal) is transmitted from the controller to the control unit of the second servomotor 39, the glass plate first holder 40a moves from the cutting processing area 20 to the loading area 19 by the rotation of the shaft of the second servomotor 39, and the glass plate first holder 40a stands by above the loading area 19. The glass plate first holder 40a and the glass plate second to fourth holders 40b to 40d also move rearward in the front-rear direction, the glass plate second holder 40b stands by above the cutting processing area 20, the glass plate third holder 40c stands by above the bend-breaking processing area 21, and the glass plate fourth holder 40d stands by above the grinding processing area 22.

A conveyance procedure (glass plate moving means) of the glass plate 11 subjected to the cutting processing from the cutting processing area 20 to the bend-breaking processing area 21 by the glass plate second holder 40b, a conveyance procedure (glass plate moving means) of the glass plate 11 subjected to the bend-breaking processing from the bend-breaking processing area 21 to the grinding processing area 22 by the glass plate third holder 40c, and a conveyance procedure (glass plate moving means) of the glass plate 11 subjected to the grinding processing from the grinding processing area 22 to the unloading area 23 by the glass plate fourth holder 40d are the same as the conveyance procedure of the glass plate 11 from the loading area 19 to the cutting processing area 20 by the glass plate first holder 40a, so that the description of the conveyance procedure by the glass plate second to fourth holders 40b to 40d is omitted.

After the glass plate 11 is placed on the cutting processing table 54, the controller transmits a reverse signal (ON signal) to the control unit of the first servomotor 34. The control unit of the first servomotor 34 that has received the reverse signal drives the first servomotor 34. The rotation of the shaft of the first servomotor 34 moves the first slide block in the front-rear direction from the front toward the rear of the first guide frame 30, whereby the cutting device 55 together with the first traveling frame 32 moves to the rear in the front-rear direction in the cutting processing area 20, and the cutting device 55 is located outside in the width direction (cutting processing start position) of the first corner 18a (front end edge 16) of the glass plate 11.

In the cutting processing, when the glass plate 11 is placed on the cutting processing table 54, although not illustrated, the suction pad installed on the cutting processing table 54 comes into contact with the lower surface 13 of the glass plate 11, the vacuum mechanism is activated, and the suction pad sucks and holds the lower surface 13 of the glass plate 11. The following cutting processing is performed on the glass plate 11 in a state where the lower surface 13 of the glass plate 11 is sucked and held by the suction pad of the cutting processing table 54.

After the cutting device 55 is positioned outside the first corner 18a of the glass plate 11 in the width direction, the controller transmits a stop signal (OFF signal) to the control unit of the first servomotor 34, and transmits a drive signal (ON signal) to the control unit of the fourth servomotor 61. The control unit of the first servomotor 34 that has received the stop signal stops the first servomotor 34, and the control unit of the fourth servomotor 61 that has received the drive signal drives the fourth servomotor 61. The rotation of the axis of the fourth servomotor 61 causes the slide block 63a to move the feed screw 60a in the width direction from the other side edge 48b of the cutting processing area 20 toward the one side edge 48a, so that the cutting processing table 54 moves in the width direction from the other side edge 48b of the cutting processing area 20 toward the one side edge 48a, and the cutting cutter wheel 67 of the cutting device 55 is located at the first corner 18a of the glass plate 11.

After the cutting cutter wheel 67 of the cutting device 55 is positioned at the first corner 18a of the glass plate 11, the controller transmits a drive signal (ON signal) and an NC control signal to the control unit of the air cylinder 65 and the fifth servomotor 66 of the cutting device 55, transmits a reverse signal (ON signal) and an NC control signal to the control unit of the first servomotor 34, and transmits an NC control signal to the control unit of the fourth servomotor 61. The control unit of the air cylinder 65, the control unit of the fifth servomotor 66, the control unit of the first servomotor 34, and the control unit of the fourth servomotor 61 of the cutting device 55 that have received the drive signal (ON signal) and the NC control signal drive the air cylinder 65, the fifth servomotor 66, the first servomotor 34, and the fourth servomotor 61 to perform a contour control movement by NC control on the vicinity of the first side edge 14 (first side edge) of the glass plate 11, and the cutting cutter wheel 67 cuts the vicinity of the first side edge 14 (first side edge) of the glass plate 11 (cutting processing means).

By driving the air cylinder 65, the fifth servomotor 66, the first servomotor 34, and the fourth servomotor 61, the cutting cutter wheel 67 moves in order from the first corner 18a→second corner 18b→third corner 18c→fourth corner 18d→first corner 18a while forming the outline cutting line K1 on the glass plate 11 by the contour control movement by the NC control. When the cutting processing on the glass plate 11 by the cutting cutter wheel 67 is completed, the cutting device 55 moves outward in the width direction (cutting processing start position) of the first corner 18a (front end edge 16) of the glass plate 11 and stands by.

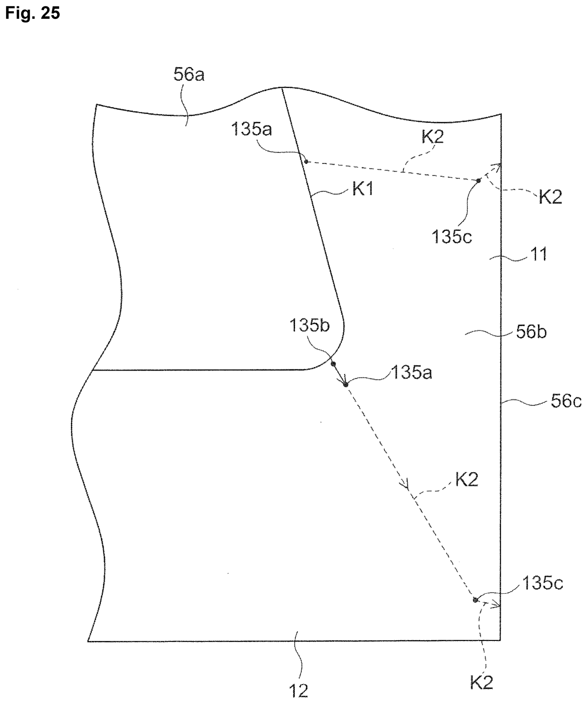

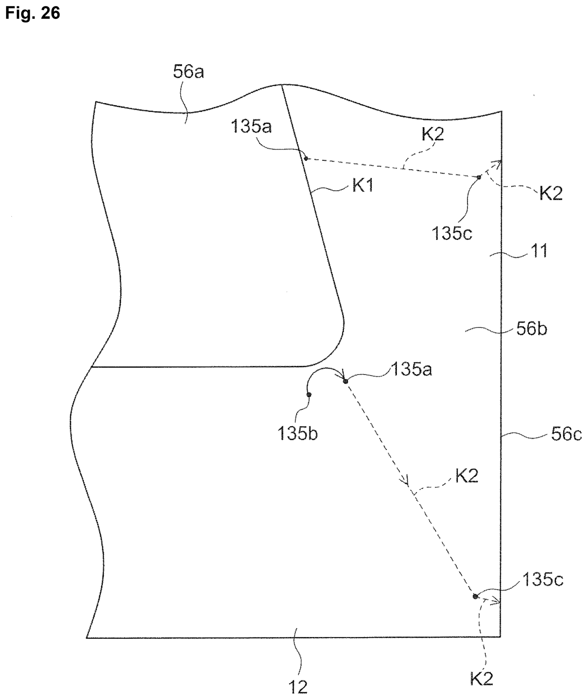

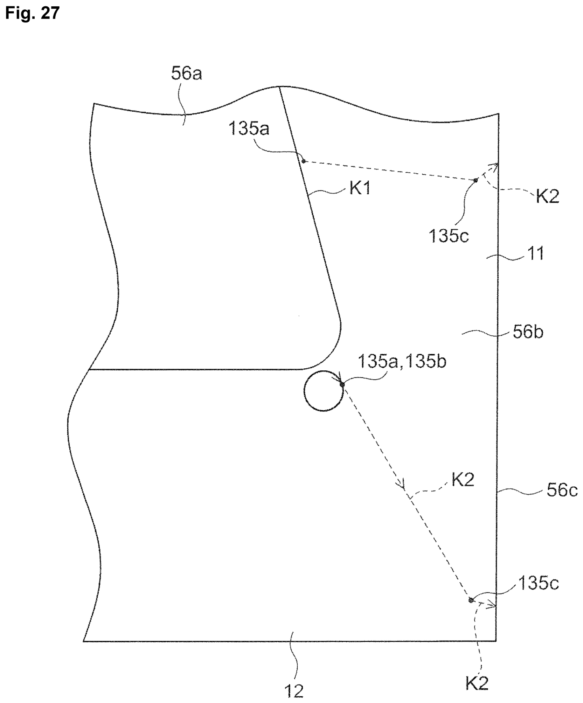

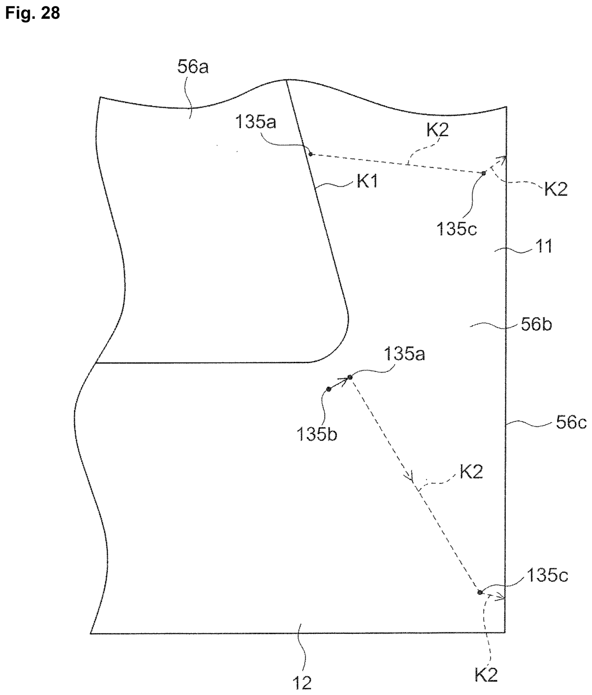

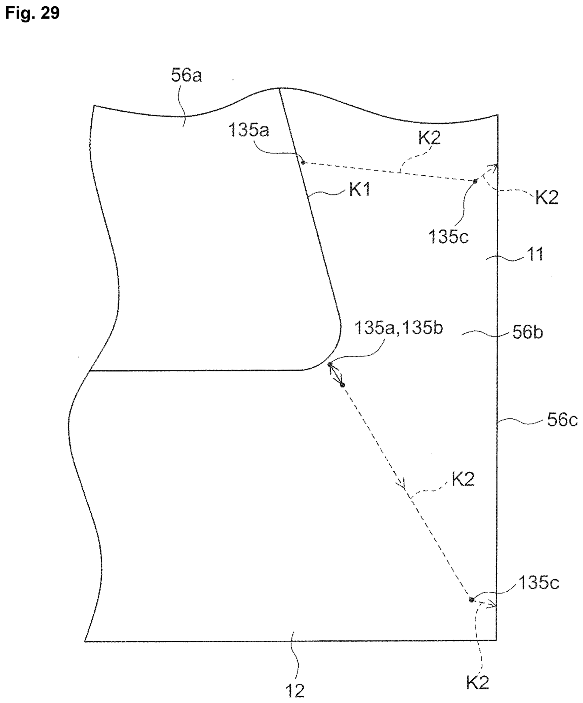

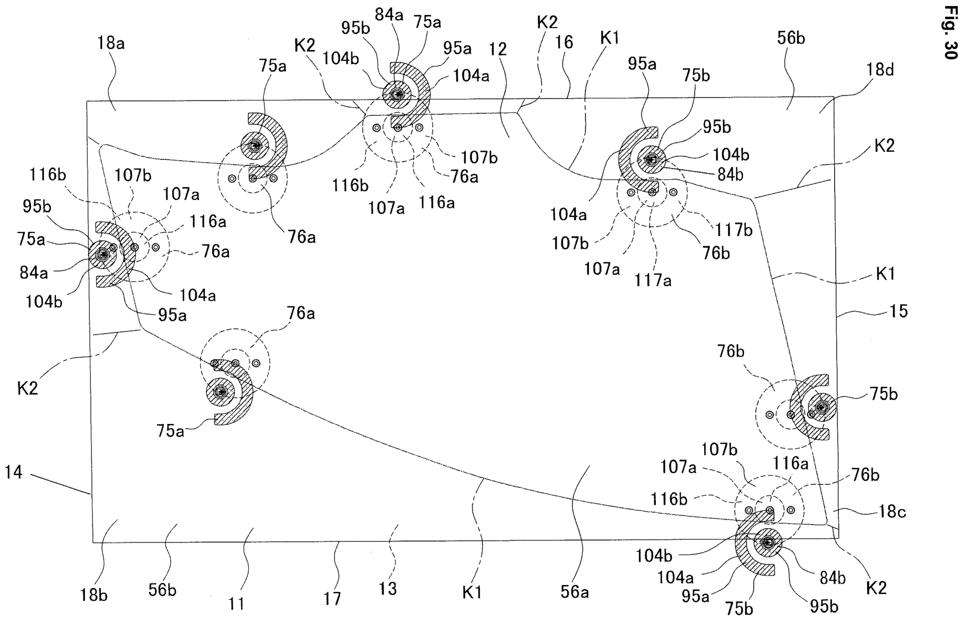

Fig. 25 is a view illustrating one example of a change in the rolling direction of the bend-breaking cutter wheel 93, and Fig. 26 is a view illustrating another example of a change in the rolling direction of the bend-breaking cutter wheel 93. Fig. 27 is a view illustrating another example of the change in the rolling direction of the bend-breaking cutter wheel 93, and Fig. 28 is a view illustrating another example of the change in the rolling direction of the bend-breaking cutter wheel 93. Fig. 29 is a view illustrating another example of the change of the rolling direction of the bend-breaking cutter wheel 93, and Fig. 30 is a view illustrating an example of a bend-breaking procedure in the bend-breaking process.

After the cutting processing (formation of outline cutting line K1) is completed for the peripheral area 56b of the glass plate 11, the glass plate second holder 40b conveys the glass plate 11 subjected to the cutting processing from the cutting processing area 20 to the bend-breaking processing area 21. In the bend-breaking processing area 21, a plurality of scoring lines K2 are formed in a peripheral area 56b extending outside the outline cutting line K1 of the glass plate 11 after the cutting processing, and the peripheral area 56b of the glass plate 11 surrounded by the outline cutting line K1 and the scoring lines K2 is bend-broken, so that the main body portion 56a of the glass plate 11 and the peripheral area 56b are separated.

In the bend-breaking processing, although not illustrated, the glass plate third holder 40c moved from the grinding processing area 22 to the bend-breaking processing area 21 is lowered onto the bend-breaking processing table 74 of the bend-breaking processing area 21 by the pad lifting mechanism, the suction pad 42 of the glass plate third holder 40c comes into contact with the upper surface 12 of the glass plate 11 placed on the bend-breaking processing table 74, and the suction pad 42 of the glass plate third holder 40c presses the glass plate 11 downward while the suction pad 42 sucks the glass plate 11 by the vacuum mechanism being activated. During the bend-breaking processing, the glass plate 11 is supported under pressure by the suction pad 42 of the glass plate third holder 40c.

After the glass plate 11 subjected to the cutting processing is placed on the bend-breaking processing table 74, the controller transmits a drive signal (ON signal) to each control unit of the holder lifting mechanism 94 (first lifting mechanism), the first pressing member lifting mechanism 96a (second lifting mechanism), the second pressing member lifting mechanism 96b (third lifting mechanism), the sixth servomotor 85 (X-axis servomotor), the seventh servomotor 87 (Y-axis servomotor), the eighth servomotor 90 (X-axis servomotor), and the ninth servomotor 91 (Y-axis servomotor) of the first bend-breaking device 75a and the second bend-breaking device 75b.

The control unit of the holder lifting mechanism 94, the control unit of the first and second pressing member lifting mechanisms 96a and 96b, and the control unit of the sixth to ninth servomotors 85, 87, 90, and 91 that have received the drive signal drive the holder lifting mechanism 94, the first and second pressing member lifting mechanisms 96a and 96b, and the sixth to ninth servomotors 85, 87, 90, and 91. The controller transmits a travel command (travel signal) to the control unit of each of the holder lifting mechanism 94, the first and second pressing member lifting mechanisms 96a and 96b, and the sixth to ninth servomotors 85, 87, 90, and 91 so that the first and second bend-breaking devices 75a and 75b travel on the upper surface 12 of the glass plate 11 along a preset travel trajectory (bend-breaking trajectory).

In the first bend-breaking device 75a driven by the holder lifting mechanism 94, the first and second pressing member lifting mechanisms 96a and 96b, and the sixth to ninth servomotors 85, 87, 90, and 91, the first bend-breaking jig 84a (bend-breaking jig) moves in the front-rear direction and the width direction (diagonal direction) by the X-axis first actuator 86a and the Y-axis first actuator 88a, and the first bend-breaking jig 84a is located at the bend-breaking start position in the initial (first) scoring line forming area on the outer side in the width direction of the first corner 18a of the glass plate 11. In the second bend-breaking device 75b driven by the holder lifting mechanism 94, the first and second pressing member lifting mechanisms 96a and 96b, and the sixth to ninth servomotors 85, 87, 90, and 91, the second bend-breaking jig 84b (bend-breaking jig) is moved in the front-rear direction and the width direction (diagonal direction) by the X-axis second actuator 86b and the Y-axis second actuator 88b, and the second bend-breaking jig 84b is located at the bend-breaking start position in the initial (first) scoring line forming area on the outer side in the width direction of the fourth corner 18d of the glass plate 11.

After the first bend-breaking jig 84a is located at the bend-breaking start position (outward in width direction) of the first corner 18a of the glass plate 11, the first bend-breaking jig 84a is moved in the front-rear direction, the width direction, and the diagonal direction by the X-axis first actuator 86a and the Y-axis first actuator 88a, and is moved to the scoring line forming start point 135a or the vicinity of the scoring line forming start point 135a (rolling direction first change start point 135b), which is the initial (first) scoring line forming location and the position separated by a close distance to the outside from the outline cutting line K1 formed on the glass plate 11. After the first bend-breaking jig 84a moves to the scoring line forming start point 135a or the vicinity of the scoring line forming start point 135a, the holder lifting mechanism 94 (first lifting mechanism) operates to lower the bend-breaking cutter holder 92 toward the upper surface 12 of the peripheral area 56b of the glass plate 11 (holder lowering means).

After the second bend-breaking jig 84b is located at the bend-breaking start position (outward in width direction) of the fourth corner 18d of the glass plate 11, the second bend-breaking jig 84b is moved in the front-rear direction, the width direction, and the diagonal direction by the X-axis second actuator 86b and the Y-axis second actuator 88b, and is moved to the scoring line forming start point 135a or the vicinity of the scoring line forming start point 135a (rolling direction first change start point 135b), which is the initial (first) scoring line forming location and the location closely spaced outward from the outline cutting line K1 formed on the glass plate 11. After the second bend-breaking jig 84b moves to the scoring line forming start point 135a or the vicinity of the scoring line forming start point 135a, the holder lifting mechanism 94 (first lifting mechanism) operates to lower the bend-breaking cutter holder 92 toward the upper surface 12 of the peripheral area 56b of the glass plate 11 (holder lowering means).

When the bend-breaking cutter holder 92 descends, the bend-breaking cutter wheel 93 is exposed downward from the through hole 105 formed at the center of the second pressing member 95b. When the bend-breaking cutter wheel 93 is exposed below the through hole 105, the bend-breaking cutter wheel 93 comes into contact with the upper surface 12 of the glass plate 11. At this time, the rolling direction of the bend-breaking cutter wheel 93 is not determined, the peripheral edge 101 of the bend-breaking cutter wheel 93 is directed in one of four directions, and the rolling direction of the bend-breaking cutter wheel 93 does not coincide with the extending direction of the virtual scoring line in the peripheral area 56b of the glass plate 11 (planned direction in which initially formed scoring line will extend). The direction in which the virtual scoring line extends is a direction from the scoring line forming start point 135a toward a rolling direction second change start point 135c in the vicinity of the inner side of the outer peripheral edge 56c of the glass plate 11. The rolling direction second change start point 135c is a position of the peripheral area 56b which is located at a close distance inward from the outer peripheral edge 56c of the glass plate 11.

The controller transmits a travel signal (ON signal) to the control unit of each of the sixth and seventh servomotors 85 and 87 so that the bend-breaking cutter wheel 93 travels (moves) in a direction in which the virtual scoring line extends (planned direction in which initially formed scoring line K2 will extend). The control units of the sixth and seventh servomotors 85 and 87 that have received the travel signal drive the sixth and seventh servomotors 85 and 87. The X-axis first actuator 86a and the Y-axis first actuator 88a are operated by driving of the sixth and seventh servomotors 85 and 87, and the bend-breaking cutter wheel 93 slightly travels (moves) in the direction in which the virtual scoring line extends (planned direction in which the initially formed scoring line K2 will extend), so that a caster effect is developed in the bend-breaking cutter wheel 93, the bend-breaking cutter wheel 93 rotates in the circumferential direction (around axis) (clockwise direction or counterclockwise direction) with respect to the cutter holder center axis O2, and the rolling (moving) direction of the peripheral edge 101 of the bend-breaking cutter wheel 93 faces the traveling (moving) direction (direction in which virtual scoring line K2 extends) of the first bend-breaking jig 84a (bend-breaking cutter holder 92) (rolling direction second changing means).

The controller transmits a travel signal (ON signal) to the control unit of each of the eighth and ninth servomotors 90 and 91 so that the bend-breaking cutter wheel 93 travels (moves) in the direction in which the virtual scoring line extends (planned direction in which initially formed scoring line K2 will extend). The control units of the eighth and ninth servomotors 90 and 91 that have received the travel signal drive the eighth and ninth servomotors 90 and 91. The X-axis second actuator 86b and the Y-axis second actuator 88b are operated by driving the eighth and ninth servomotors 90 and 91, and the bend-breaking cutter wheel 93 slightly travels (moves) in the direction in which the virtual scoring line extends (planned direction in which initially formed scoring line K2 will extend), so that a caster effect is developed in the bend-breaking cutter wheel 93, the bend-breaking cutter wheel 93 rotates in the circumferential direction (around axis) (clockwise direction or counterclockwise direction) with respect to the cutter holder center axis O2, and the rolling (moving) direction of the peripheral edge 101 of the bend-breaking cutter wheel 93 faces the traveling (moving) direction (direction in which virtual scoring line K2 extends) of the second bend-breaking jig 84b (bend-breaking cutter holder 92) (rolling direction second changing means).

The travel dimension (movement dimension) of the bend-breaking cutter wheel 93 (first and second bend-breaking jigs 84a and 84b) in the direction in which the virtual scoring line extends (planned direction in which initially formed scoring line K2 will extend) is 0.8 to 8 mm, preferably 1 to 5 mm. A separation dimension between the scoring line forming start point 135a and the outline cutting line K1 formed on the glass plate 11 is in a range of 1 to 15 mm, preferably in a range of 3 to 10 mm.

In the first and second bend-breaking devices 75a and 75b (bend-breaking device 75), the first and second bend-breaking jigs 84a and 84b (bend-breaking jigs) travel slightly in a planned direction in which an initially formed scoring line K2 on the upper surface 12 of the peripheral area 56b in the vicinity of the outer side of the outline cutting line K1 on the outer side of the glass plate 11 will extend from the scoring line forming start point 135a or the vicinity of the scoring line forming start point 135a, or travel in a planned direction in which the initially formed scoring line K2 on the upper surface 12 of the glass plate 11 will extend on the inner side of the outline cutting line K1 by the first and second bend-breaking jigs 84a and 84b (bend-breaking jigs), whereby the bend-breaking cutter wheel 93 rotates in a circumferential direction (around axis) with respect to the cutter holder center axis O2, since the rolling (moving) direction of the peripheral edge 101 of the bend-breaking cutter wheel 93 changes to the planned extending direction of the initially formed scoring line K2, the rolling direction of the peripheral edge 101 of the bend-breaking cutter wheel 93 can be quickly and easily changed to the planned extending direction of the initially formed scoring line K2, and the initial (first) scoring line K2 extending in the planned direction can be formed in the peripheral area 56b of the glass plate 11.

An example of the rolling direction second changing means of the bend-breaking cutter wheel 93 is, as illustrated in Fig. 25, a configuration in which, when the first bend-breaking jig 84a (bend-breaking jig) and the second bend-breaking jig 84b (bend-breaking jig) travel (move) linearly (travel dimension: 0.8 to 8 mm, preferably 1 to 5 mm) from a rolling direction first change start point 135b in the vicinity of the outer side of the outline cutting line K1 slightly spaced inward from the scoring line forming start point 135a toward the scoring line forming start point 135a, and the peripheral edge 101 of the bend-breaking cutter wheel 93 is positioned at the scoring line forming start point 135a, the rolling (moving) direction of the peripheral edge 101 of the bend-breaking cutter wheel 93 is directed to the traveling (moving) directions of the first and second bend-breaking jigs 84a and 84b, and the rolling direction of the peripheral edge 101 of the bend-breaking cutter wheel 93 faces a direction in which the virtual scoring line extends (planned direction in which initially (first) formed scoring line K2 will extend) (rolling direction second changing means).

Another example of the rolling direction second changing means of the bend-breaking cutter wheel 93 is, as illustrated in Fig. 26, a configuration in which, when the first bend-breaking jig 84a (bend-breaking jig) and the second bend-breaking jig 83b (bend-breaking jig) travel (move) in a circular shape (semicircular shape) from the rolling direction first change start point 135b slightly laterally separated from the scoring line forming start point 135a toward the scoring line forming start point 135a (travel dimension: 0.8 to 8 mm, preferably 1 to 5 mm), the peripheral edge 101 of the bend-breaking cutter wheel 93 turns 180° to define a circular trajectory (semicircular trajectory), and the peripheral edge 101 of the cutter wheel 93 is located at the scoring line forming start point 135a, the rolling (moving) direction of the peripheral edge 101 of the bend-breaking cutter wheel 93 is directed in the traveling (moving) direction of the first and second bend-breaking jigs 84a and 84b, and the rolling direction of the peripheral edge 101 of the bend-breaking cutter wheel 93 faces a direction in which the virtual scoring line extends (planned direction in which initially (first) formed scoring line K2 will extend) (rolling direction second changing means).

Another example of the change of the rolling direction of the bend-breaking cutter wheel 93 is, as illustrated in Fig. 27, a configuration in which, when the first bend-breaking jig 84a (bend-breaking jig) and the second bend-breaking jig 84b (bend-breaking jig) travel (move) in a circular shape (perfect circular shape) from the rolling direction first change start point 135b in the vicinity of the scoring line forming start point 135a or the rolling direction first change start point 135b at the same point as the scoring line forming start point 135a toward the scoring line forming start point 135a (travel dimension: 0.8 to 8 mm, preferably 1 to 5 mm), and the first and second bend-breaking jigs 84a and 84b define a circular trajectory so that the peripheral edge 101 of the cutter wheel 93 is positioned at the scoring line forming start point 135a, the rolling (movement) direction of the peripheral edge 101 of the bend-breaking cutter wheel 93 faces a direction in which the virtual scoring line, which is the traveling (movement) direction of the first and second bend-breaking jigs 84a and 84b, extends (planned direction in which initially (first) formed scoring line K2 will extend) (rolling direction second changing means). In Fig. 27, the scoring line forming start point 135a is located at a contact point of a circular trajectory (perfect circle) defined by the first bend-breaking jig 84a and the second bend-breaking jig 84b, and the scoring line K2 extends in a tangential direction of the circular trajectory (perfect circle). The scoring line forming start point 135a may be located on a circular trajectory (perfect circle) defined by the first bend-breaking jig 84a and the second bend-breaking jig 84b, and the scoring line K2 may extend in the radial direction of the circular trajectory (perfect circle).

Another example of the change of the rolling direction of the bend-breaking cutter wheel 93 is, as illustrated in Fig. 28, a configuration in which the first bend-breaking jig 84a and the second bend-breaking jig 84b slightly travel in a straight line (straight trajectory) from the rolling direction first change start point 135b toward the scoring line forming start point 135a so that an angle formed by a traveling line extending in a straight line from the rolling direction first change start point 135b slightly separated laterally from the scoring line forming start point 135a toward the scoring line forming start point 135a and a virtual scoring line K2 extending in a straight line from the scoring line forming start point 135a toward the rolling direction first change start point 135b becomes 90° (or 90° or less) (travel dimension: 0.8 to 8 mm, preferably 1 to 5 mm), and after the rolling direction of the bend-breaking cutter wheel 93 is changed to the direction in which the traveling line extends, the traveling directions of the first bend-breaking jig 84a and the second bend-breaking jig 84b are changed to the extending direction of the virtual scoring line at an angle of 90° (or 90° or less) at the scoring line forming start point 135a, and the first bend-breaking jig 84a and the second bend-breaking jig 84b travel in the extending direction of the virtual scoring line, the rolling (moving) direction of the peripheral edge 101 of the bend-breaking cutter wheel 93 faces the extending direction of the virtual scoring line (planned direction in which initially (first) formed scoring line K2 will extend) (rolling direction second changing means). In Fig. 28, the case where the angle formed by the straight traveling line and the straight virtual scoring line is 90° has been described, but the angle formed by the traveling line and the virtual scoring line may be 90° or less, such as 45°, 30°, and 15°.

Another example of the change of the rolling direction of the bend-breaking cutter wheel 93 is, as illustrated in Fig. 29, a configuration in which the first bend-breaking jig 84a and the second bend-breaking jig 84b slightly travel (travel dimension: 0.8 to 8 mm, preferably 1 to 5 mm) in a straight line (straight trajectory) from a point near the virtual scoring line slightly separated from the scoring line forming start point 135a toward the scoring line forming start point 135a along the virtual scoring line, or the first bend-breaking jig 84a and the second bend-breaking jig 84b slightly travel (travel dimension: 0.8 to 8 mm, preferably 1 to 5 mm) in a straight line (straight trajectory) from a point on the virtual scoring line slightly separated from the scoring line forming start point 135a toward the scoring line forming start point 135a on the virtual scoring line, and after the rolling direction of the bend-breaking cutter wheel 93 is changed to the extending direction of the virtual scoring line, the first bend-breaking jig 84a and the second bend-breaking jig 84b are reversed (180° U-turn) at the scoring line forming start point 135a to change the traveling direction of the first bend-breaking jig 84a and the second bend-breaking jig 84b to the direction in which the virtual scoring line extends, and the first bend-breaking jig 84a and the second bend-breaking jig 84b travel in the direction in which the virtual scoring line extends, so that the rolling (moving) direction of the peripheral edge 101 of the bend-breaking cutter wheel 93 faces the direction in which the virtual scoring line extends (planned direction in which initially (first) formed scoring line K2 will extend) (rolling direction second changing means).

In the first and second bend-breaking devices 75a and 75b (bend-breaking device 75), the cutter wheel axis O3 of the bend-breaking cutter wheel 93 is eccentric outward in the radial direction with respect to the cutter holder center axis O2 of the bend-breaking cutter holder 92 (holder main body 97), and the bend-breaking cutter wheel 93 has a caster effect. Therefore, only by making the first bend-breaking jig 84a and the second bend-breaking jig 84b travel slightly in the manner illustrated in Figs. 25 to 29 from the rolling direction first change start point 135b near the outer side of the outline cutting line K1 toward the scoring line forming start point 135a (only by slightly travelling (moving) bend-breaking jigs 84a and 84b from vicinity of outer side of outline cutting line K1 in direction in which virtual scoring line extends), the bend-breaking cutter wheel 93 rotates in the circumferential direction (around axis) with respect to the cutter holder center axis O2, and the rolling (rotating) direction of the peripheral edge 101 of the bend-breaking cutter wheel 93 changes to the extending direction of the virtual scoring line (traveling (movement) direction of first and second bend-breaking jigs 84a and 84b), The bend-breaking cutter wheel 93 can be reliably rotated in the circumferential direction (around axis) with respect to the cutter holder center axis, the rolling direction of the peripheral edge 101 of the bend-breaking cutter wheel 93 can be quickly and easily changed, and the rolling direction of the bend-breaking cutter wheel 93 can be accurately matched with the direction in which the virtual scoring line extends (planned direction in which initially (first) formed scoring line will extend).

After the rolling direction of the peripheral edge 101 of the bend-breaking cutter wheel 93 is changed to the traveling direction of the first and second bend-breaking jigs 84a and 84b by a rolling direction changing means and the rolling direction of the bend-breaking cutter wheel 93 becomes the same as the direction in which the virtual scoring line extends (planned direction in which initially formed scoring line K2 will extend), the first bend-breaking jig 84a and the second bend-breaking jig 84b travel in a straight line from the scoring line forming start point 135a toward the rolling direction second change start point 135c in the vicinity of the inner side of the outer peripheral edge 56c of the glass plate 11 while the peripheral edge 101 of the bend-breaking cutter wheel 93 comes into contact with the upper surface 12 of the glass plate 11 with a predetermined pressing force, the bend-breaking cutter wheel 93 forms an initial (first) straight scoring line K2 (scribe) extending from the scoring line forming start point 135a toward the rolling direction second change start point 135c at a scoring line forming location in the peripheral area 56b of the glass plate 11 (scoring line forming means). The first bend-breaking jig 84a and the second bend-breaking jig 84b travel synchronously at the same speed.

In the scoring line forming means, in a state where while the first support device 76a moves in synchronization with the first bend-breaking device 75a, the first and second support surfaces 116a and 116b of the first and second support members 107a and 107b support the lower surface 13 of the peripheral area 56b extending outside the outline cutting line K1 of the glass plate 11, the bend-breaking cutter wheel 93 of the first bend-breaking jig 84a forms the scoring line K2 in the peripheral area 56b of the glass plate 11. In the bend-breaking device 75, the first and second support surfaces 116a and 116b of the first and second support members 107a and 107b support the lower surface 13 of the peripheral area 56b of the glass plate 11, so that elastic deformation of the peripheral area 56b can be prevented, and the scoring line K2 having a predetermined depth can be reliably formed in the peripheral area 56b in a state where the peripheral area 56b of the glass plate 11 is horizontally held.

When the bend-breaking cutter wheel 93 of each of the first and second bend-breaking jigs 84a and 84b reaches the rolling direction second change start point 135c from the scoring line forming start point 135a, the controller extracts, from the large-capacity hard disk, the planned direction (direction in which next virtual scoring line extends) in which the scoring line K2 to be formed next (second) stored in the large-capacity hard disk extends, and changes the traveling directions of the first bend-breaking jig 84a and the second bend-breaking jig 84b to the planned direction in which the scoring line to be formed next (second) will extend. The first bend-breaking jig 84a and the second bend-breaking jig 84b change directions in a planned direction in which a scoring line K2 to be formed next (second) at the rolling direction second change start point 135c will extend, and travel from the rolling direction second change start point 135c toward the outer peripheral edge 56c of the peripheral area 56b of the glass plate 11.

A rolling direction of the peripheral edge 101 of the bend-breaking cutter wheel 93 is changed to a planned direction in which a scoring line to be formed next (second) will extend, and a linear scoring line K2 (scribe) extending in the same direction as the planned direction in which the scoring line K2 to be formed next (second) will extend from the rolling direction second change start point 135c of the bend-breaking cutter wheel 93 toward the outer peripheral edge 56c of the peripheral area 56b of the glass plate 11 is formed (rolling direction first changing means). The separation dimension between the rolling direction second change start point 135c and the outer peripheral edge 56c of the peripheral area 56b of the glass plate 11 is in the range of 1 to 15 mm, preferably in the range of 3 to 10 mm.

After the scoring line K2 is formed at the initial (first) scoring line forming location in the peripheral area 56b of the glass plate 11, the holder lifting mechanism 94 (first lifting mechanism) operates to lift the bend-breaking cutter holder 92 from the outer peripheral edge 56c (scoring line forming end point) of the peripheral area 56b of the glass plate 11 (holder lifting means). After the bend-breaking cutter holder 92 is lifted by the holder lifting means, the first and second bend-breaking devices 75a and 75b are moved to the next (second) scoring line forming location of the peripheral area 56b of the glass plate 11 by the operation of the X-axis first and second actuators 86a and 86b and the Y-axis first and second actuators 88a and 88b (bend-breaking device moving means).

The first bend-breaking jig 84a is positioned at a bend-breaking start position (scoring line forming start point 135a) of the next (second) scoring line forming location outside the glass plate 11 in the width direction, and the second bend-breaking jig 84b is positioned at a bend-breaking start position (scoring line forming start point 135a) of the next (second) scoring line forming location in the vicinity of the outer side of the outline cutting line K1 of the glass plate 11. The first and second support devices 76a and 76b move to the bend-breaking start positions of the next (second) scoring line forming locations in synchronization with the first and second bend-breaking devices 75a and 75b.

After the first and second bend-breaking devices 75a and 75b move to the bend-breaking start positions (scoring line forming start points 135a) at the next (second) scoring line forming locations, the holder lifting mechanism 94 (first lifting mechanism) operates to lower the bend-breaking cutter holder 92 toward the upper surface 12 of the peripheral area 56b of the glass plate 11 (holder lowering means), the bend-breaking cutter wheel 93 is exposed downward from the through hole 105 formed at the center of the second pressing member 95b, and the bend-breaking cutter wheel 93 comes into contact with the upper surface 12 of the glass plate 11 in the vicinity of the outer side of the outline cutting line K1 at the next (second) scoring line forming location with a predetermined pressing force.

After the bend-breaking cutter holder 92 is lowered (contact) to the upper surface 12 of the peripheral area 56b of the glass plate 11 at the second (next) scoring line forming location by the holder lowering means, as described above, the rolling direction of the peripheral edge 101 of the bend-breaking cutter wheel 93 is changed to the planned direction in which the scoring line K2 to be formed next (second) will extend by the rolling direction first changing means. Therefore, in a state in which the rolling direction of the peripheral edge 101 of the bend-breaking cutter wheel 93 faces the planned direction in which the scoring line K2 to be formed next (second) will extend, the first bend-breaking jig 84a and the second bend-breaking jig 84b travel linearly from the scoring line forming start point 135a toward the rolling direction second change start point 135c in the vicinity of the inner side of the outer peripheral edge 56c of the glass plate 11. The bend-breaking cutter wheel 93 forms a next (second) straight scoring line K2 (scribe) extending from the scoring line forming start point 135a toward the rolling direction second change start point 135c at a scoring line forming location in the peripheral area 56b of the glass plate 11 (scoring line forming means).

When the bend-breaking cutter wheel 93 of each of the first and second bend-breaking jigs 84a and 84b reaches the rolling direction second change start point 135c from the scoring line forming start point 135a, the controller extracts, from the large-capacity hard disk, the planned direction (direction in which next virtual scoring line extends) in which the scoring line K2 to be formed next (third) stored in the large-capacity hard disk extends, and changes the traveling directions of the first bend-breaking jig 84a and the second bend-breaking jig 84b to the planned direction in which the scoring line K2 to be formed next (third) will extend. The first bend-breaking jig 84a and the second bend-breaking jig 84b travel from the rolling direction second change start point 135c toward the outer peripheral edge 56c of the peripheral area 56b of the glass plate 11, and the rolling direction of the bend-breaking cutter wheel 93 changes to the planned direction in which the scoring line K2 to be formed next (third) will extend between the rolling direction second change start point 135c and the outer peripheral edge 56c.

The rolling direction of the peripheral edge 101 of the bend-breaking cutter wheel 93 is changed to the planned direction in which the scoring line K2 to be formed next (third) will extend, and the bend-breaking cutter wheel 93 forms a linear scoring line K2 (scribe) extending from the second change start point 135c toward the outer peripheral edge 56c of the peripheral area 56b of the glass plate 11 in the same direction as the planned direction in which the scoring line K2 to be formed next (third) will extend (rolling direction first changing means).

After the scoring line K2 is formed at the initial (first) scoring line forming location and the next (second) scoring line forming location in the peripheral area 56b of the glass plate 11, the holder lifting mechanism 94 (first lifting mechanism) operates to lift the bend-breaking cutter holder 92 from the outer peripheral edge 56c (scoring line forming end point) of the peripheral area 56b of the glass plate 11 (holder lifting means). After the bend-breaking cutter holder 92 is lifted by the holder lifting means, the first and second bend-breaking devices 75a and 75b are moved to the initial (first) pressing area (predetermined position between initial (first) scoring line K2 and next (second) scoring line K2) by the operation of the X-axis first and second actuators 86a and 86b and the Y-axis first and second actuators 88a and 88b (bend-breaking device moving means).

After the first and second bend-breaking devices 75a and 75b are moved to the initial (first) pressing area by the bend-breaking device moving means, as illustrated in Fig. 31, the first pressing member 95a of the first and second bend-breaking devices 75a and 75b is lowered in the vertical direction by the first pressing member lifting mechanism 96a (second lifting mechanism), and the first pressing surface 104a of the first pressing member 95a and the first and second support surfaces 116a and 116b of the first and second support members 107a and 107b sandwich the main body portion 56a and the peripheral area 56b of the glass plate 11 in the initial (first) pressing area (glass plate clamping means).

In the glass plate clamping means, when the first pressing member 95a of each of the first and second bend-breaking devices 75a and 75b is lowered by the first pressing member lifting mechanism 96a, the first pressing surface 104a formed in a semi-annular shape of the first pressing member 95a comes into contact with the upper surface 12 of the peripheral area 56b of the glass plate 11 extending in the vicinity of the outer side of the outline cutting line K1 across the outline cutting line K1 and the upper surface 12 of the main body portion 56a of the glass plate 11 extending in the vicinity of the inner side of the outline cutting line K1.

In the glass plate clamping means, when the first and second support members 107a and 107b are lifted by the second support member lifting mechanism 108 (fourth lifting mechanism), the second support surface 116b formed in an annular shape of the second support member 107b supports the lower surface 13 of the peripheral area 56b of the glass plate 11 extending in the vicinity of the outer side of the outline cutting line K1 across the outline cutting line K1 and the lower surface 13 of the main body portion 56a of the glass plate 11 extending in the vicinity of the inner side of the outline cutting line K1, and the first support surface 116a formed in a perfect circular shape of the first support member 107a supports the lower surface 13 of the main body portion 56a of the glass plate 11 extending in the vicinity of the inner side of the outline cutting line K1, the vicinity of the outer peripheral edge of the first support surface 116a supports the lower surface 13 of the peripheral area 56b of the glass plate 11 extending to the vicinity of the outer side of the outline cutting line K1.

After the first pressing surface 104a of the first pressing member 95a and the first and second support surfaces 116a and 116b of the first and second support members 107a and 107b sandwich the main body portion 56a and the peripheral area 56b of the glass plate 11 by the glass plate clamping means, the second support member 107b is lowered in the vertical direction in the initial (first) pressing area by the second support member lifting mechanism 108 (fourth lifting mechanism) (second support member lowering means). When the second support member 107b descends, a gap (step between first support surface 116a and second support surface 116b) is formed between the lower surface 13 of the glass plate 11 and the second support surface 116b. Note that sandwiching of the main body portion 56a of the glass plate 11 by the first pressing surface 104a of the first pressing member 95a and the first support surface 116a of the first support member 107a is maintained.

After the second support member 107b is lowered by the second support member lowering means, while the sandwiching of the main body portion 56a of the glass plate 11 by the first pressing surface 104a of the first pressing member 95a and the first support surface 116a of the first support member 107a is maintained, the second pressing member 95b is lowered in the vertical direction by the second pressing member lifting mechanism 96b (third lifting mechanism), the second pressing surface 104b formed in an annular shape of the second pressing member 95b comes into contact with the upper surface 12 of the peripheral area 56b of the glass plate 11 extending in the vicinity of the outer side of the outline cutting line K1, and the second pressing surface 104b of the second pressing member 95b presses downward the peripheral area 56b of the glass plate 11 extending outside the outline cutting line K1 in the initial (first) pressing area. When the second pressing surface 104b presses the peripheral area 56b downward, the peripheral area 56b is bend-broken (edge bend-breaking means). In the edge bend-breaking means, the main body portion 56a and the peripheral area 56b of the glass plate 11 are separated from each other. The peripheral area 56b of the bend-broken (separated) glass plate 11 remains on the belt conveyor 77.

In the initial (first) pressing area, after the edge bend-breaking means bend-breaks the peripheral area 56b of the glass plate 11 extending between the initial (first) scoring line K2 and the next (second) scoring line K2, the second support member 107b is lifted in the vertical direction by the second support member lifting mechanism 108 (fourth lifting mechanism), the first pressing member 95a is lifted in the vertical direction by the first pressing member lifting mechanism 96a (second lifting mechanism), and the second pressing member 95b is lifted in the vertical direction by the second pressing member lifting mechanism 96b (third lifting mechanism). After the first and second pressing members 95a and 95b and the second support member 107b are raised, the first and second bend-breaking devices 75a and 75b are moved to the (third) scoring line forming locations next to the peripheral area 56b of the glass plate 11 by the operations of the X-axis first and second actuators 86a and 86b and the Y-axis first and second actuators 88a and 88b (bend-breaking device moving means).

The first bend-breaking jig 84a is positioned at a bend-breaking start position (scoring line forming start point 135a) of the next (third) scoring line forming location outside the glass plate 11 in the width direction, and the second bend-breaking jig 84b is positioned at a bend-breaking start position (scoring line forming start point 135a) of the next (third) scoring line forming location in the vicinity of the outer side of the outline cutting line K1 of the glass plate 11. The first and second support devices 76a and 76b move to the bend-breaking start positions of the next (third) scoring line forming locations in synchronization with the first and second bend-breaking devices 75a and 75b.

After the first and second bend-breaking devices 75a and 75b move to the bend-breaking start positions (scoring line forming start points 135a) at the next (third) scoring line forming locations, the holder lifting mechanism 94 (first lifting mechanism) operates to lower the bend-breaking cutter holder 92 toward the upper surface 12 of the peripheral area 56b of the glass plate 11 (holder lowering means), the bend-breaking cutter wheel 93 is exposed downward from the through hole 105 formed at the center of the second pressing member 95b, and the bend-breaking cutter wheel 93 comes into contact with the upper surface 12 of the glass plate 11 in the vicinity of the outer side of the outline cutting line K1 at the next (third) scoring line forming location with a predetermined pressing force.

After the bend-breaking cutter holder 92 is lowered (contact) to the upper surface 12 of the peripheral area 56b of the glass plate 11 at the next (third) scoring line forming location by the holder lowering means, the rolling direction of the peripheral edge 101 of the bend-breaking cutter wheel 93 is changed to the planned extending direction of the scoring line K2 formed next (third) by the rolling direction first changing means. Therefore, in a state where the rolling direction of the peripheral edge 101 of the bend-breaking cutter wheel 93 is directed to the planned extending direction of the scoring line K2 formed next (third), the first bend-breaking jig 84a and the second bend-breaking jig 84b travel linearly from the scoring line forming start point 135a toward the rolling direction second change start point 135c in the vicinity of the inside of the outer peripheral edge 56c of the glass plate 11. The bend-breaking cutter wheel 93 forms the next (third) straight scoring line K2 (scribe) extending from the scoring line forming start point 135a toward the rolling direction second change start point 135c at the scoring line forming location in the peripheral area 56b of the glass plate 11 (scoring line forming means).

When the bend-breaking cutter wheel 93 of each of the first and second bend-breaking jigs 84a and 84b reaches the rolling direction second change start point 135c from the scoring line forming start point 135a, the controller extracts, from the large-capacity hard disk, the planned direction (direction in which next virtual scoring line extends) in which the scoring line K2 to be formed next (fourth) stored in the large-capacity hard disk will extend, and changes the traveling directions of the first bend-breaking jig 84a and the second bend-breaking jig 84b to the planned direction in which the scoring line K2 to be formed next (fourth) will extend. The first bend-breaking jig 84a and the second bend-breaking jig 84b travel from the rolling direction second change start point 135c toward the outer peripheral edge 56c of the peripheral area 56b of the glass plate 11, and the rolling direction of the bend-breaking cutter wheel 93 changes to the planned direction in which the scoring line K2 to be formed next (fourth) will extend between the rolling direction second change start point 135c and the outer peripheral edge 56c.

The rolling direction of the peripheral edge 101 of the bend-breaking cutter wheel 93 is changed to the planned direction in which the scoring line K2 to be formed next (fourth) will extend, and the bend-breaking cutter wheel 93 forms a linear scoring line K2 (scribe) extending from the second change start point 135c toward the outer peripheral edge 56c of the peripheral area 56b of the glass plate 11 in the same direction as the planned direction in which the scoring line K2 to be formed next (fourth) will extend (rolling direction first changing means).

In each of the first and second bend-breaking devices 75a and 75b (bend-breaking device 75), at each of the scoring line forming locations in the peripheral area 56b of the glass plate 11 to be processed, the rolling direction of the peripheral edge 101 of the bend-breaking cutter wheel 93 at the time of forming the scoring line K2 one ahead is changed to the planned direction in which the scoring line K2 to be formed next (second to n-th) will extend, and the scoring line K2 can be formed at each of the scoring line forming locations while the rolling direction of the peripheral edge 101 at the time of forming the scoring line K2 one ahead is caused to coincide with the planned direction in which the scoring line K2 to be formed next (second to n-th) will extend, and the plurality of scoring lines K2 can be efficiently formed at the scoring line forming locations of the peripheral area 56b of the glass plate 11 in a short time.

The first and second bend-breaking devices 75a and 75b (bend-breaking device 75) can minimize an error due to eccentricity by rotating the bend-breaking cutter wheel 93 itself in a circumferential direction (around axis) with respect to the cutter holder center axis O2 of the bend-breaking cutter holder 92 (around rotation center), setting the rotation control axis for rotating the bend-breaking cutter wheel 93 itself as the cutter holder center axis O2 of the bend-breaking cutter holder 92, and aligning the angle of the rotation control axis with the rolling direction of the bend-breaking cutter wheel 93 (moving direction of bend-breaking jigs 84a and 84b).

After the scoring line K2 is formed at the (third) scoring line forming location next to the peripheral area 56b of the glass plate 11, the bend-breaking cutter holder 92 is lifted from the outer peripheral edge 56c (scoring line forming end point) of the peripheral area 56b of the glass plate 11 by the holder lifting mechanism 94 (first lifting mechanism) (holder lifting means). After the bend-breaking cutter holder 92 is lifted, the first and second bend-breaking devices 75a and 75b are moved to the next (second) pressing area (predetermined position between next (second) scoring line K2 and next (third) scoring line K2) by the first and X-axis second actuators 86a and 86b and the first and Y-axis second actuators 88a and 88b (bend-breaking device moving means).

After the first and second bend-breaking devices 75a and 75b move to the next (second) pressing area, the first pressing member 95a of the first and second bend-breaking devices 75a and 75b is lowered in the vertical direction by the first pressing member lifting mechanism 96a (second lifting mechanism), and the first pressing surface 104a of the first pressing member 95a and the first and second support surfaces 116a and 116b of the first and second support members 107a and 107b sandwich the main body portion 56a and the peripheral area 56b of the glass plate 11 in the next (second) pressing area (glass plate clamping means). After the first pressing surface 104a of the first pressing member 95a and the first and second support surfaces 116a and 116b of the first and second support members 107a and 107b sandwich the main body portion 56a and the peripheral area 56b of the glass plate 11, the second support member 107b is lowered in the vertical direction in the next (second) pressing area by the second support member lifting mechanism 108 (fourth lifting mechanism) (second support member lowering means).

After the second support member 107b descends, while the first pressing surface 104a of the first pressing member 95a and the first support surface 116a of the first support member 107a maintain the sandwiching of the main body portion 56a of the glass plate 11, the second pressing member 95b descends in the vertical direction by the second pressing member lifting mechanism 96b (third lifting mechanism), and the second pressing surface 104b of the second pressing member 95b presses downward the peripheral area 56b of the glass plate 11 extending outside the outline cutting line K1 in the next (second) pressing area. When the second pressing surface 104b presses the peripheral area 56b downward, the peripheral area 56b located between the next (second) scoring line K2 and the next (third) scoring line K2 is bend-broken (edge bend-breaking means). The peripheral area 56b of the bend-broken (separated) glass plate 11 remains on the belt conveyor 77.

In the first and second bend-breaking devices 75a and 75b (bend-breaking device 75), after the bend-breaking cutter wheel 93 and the first and second pressing members 95a and 95b are lifted by the holder lifting mechanism 94 (first lifting mechanism) and the first and second pressing member lifting mechanisms 96a and 96b (second and third lifting mechanism), the first and second bend-breaking devices 75a and 75b are moved in the front-rear direction (horizontal direction), the width direction (horizontal direction), and the diagonal direction (horizontal direction) on the upper surface side of the glass plate 11 (bend-breaking device moving means), and after the second support member 107b is lifted by the second support member lifting mechanism 108 (fourth lifting mechanism), the first and second support devices 76a and 76b move in synchronization with the first and second bend-breaking devices 75a and 75b on the lower surface 13 side of the glass plate 11 in the front-rear direction (horizontal direction), the width direction (horizontal direction), and the diagonal direction (horizontal direction) (support device moving means), and after the first and second bend-breaking devices 75a and 75b and the first and second support devices 76a and 76b are moved in synchronization by the bend-breaking device moving means and the support device moving means, the first bend-breaking device 75a and the first support device 76a cooperate with each other, and the second bend-breaking device 75b and the second support device 76b cooperate with each other to perform the scoring line forming means, the glass plate clamping means, and the edge bend-breaking means.

The above-described procedure is repeated, and all the peripheral areas 56b of the glass plate 11 where the initial (first) to the next (second to n-th) scoring lines K2 are formed are bend-broken by the first and second bend-breaking devices 75a and 75b moved from the initial (first) pressing area to the next (second to n-th) pressing area. Note that the number of scoring lines K2 is determined by the size (area) and thickness of the glass plate 11 and the shape of the main body of the glass plate 11 formed by the outline cutting lines K1. In the rolling direction first changing means, the first bend-breaking jig 84a and the second bend-breaking jig 84b travel from the rolling direction second change start point 135c toward the outer peripheral edge 56c of the peripheral area 56b of the glass plate 11, and the rolling direction of the bend-breaking cutter wheel 93 changes to the planned direction in which the scoring line K2 to be formed next (third to n-th) will extend between the rolling direction second change start point 135c and the outer peripheral edge 56c.

After the bend-breaking processing is completed and the glass plate 11 subjected to the bend-breaking processing is lifted upward by the glass plate third holder 40c, the controller transmits a drive signal (ON signal) to the control unit of the conveyor drive motor 78. The control unit of the conveyor drive motor 78 that has received the drive signal drives the belt conveyor 77, and the belt conveyor 77 moves from one side to the other side in the width direction. By the movement of the belt conveyor 77 in the width direction, the bend-broken peripheral area 56b (peripheral portion) of the glass plate 11 remaining on the belt conveyor 77 gradually moves from one side to the other side in the width direction, and the peripheral area 56b falls from the belt conveyor 77 and is stored (discarded) in a dust box (not illustrated).

After the bend-breaking processing of the glass plate 11 is completed, the main body portion 56a of the glass plate 11 after the bend-breaking processing is conveyed from the bend-breaking processing area 21 to the grinding processing area 22 by the glass plate third holder 40c, and the main body portion 56a of the glass plate 11 is placed on the grinding processing table 117. After the main body portion 56a is placed on the grinding processing table 117, the controller transmits a drive signal (ON signal) to the control unit of the vacuum mechanism of the grinding processing table 117 and transmits a reverse signal (ON signal) to the control unit of the first servomotor 34. The control unit of the vacuum mechanism that has received the drive signal drives the vacuum mechanism. The main body portion 56a of the glass plate 11 is sucked and held by the suction pad 119 (grinding processing table 117) by driving of the vacuum mechanism.

The control unit of the first servomotor 34 that has received the reverse signal drives the first servomotor 34. The rotation of the shaft of the first servomotor 34 moves the first slide block in the front-rear direction from the front toward the rear of the first guide frame 30, whereby the grinding device 118 moves together with the first traveling frame 32 to the rear in the front-rear direction in the grinding processing area 22, and the grinding device 118 is located on the outer side in the width direction (grinding processing start position) of the first corner (front side edge) of the main body portion 56a of the glass plate 11. The grinding device 118 moves the peripheral portion (side edge, front and rear end edges) of the main body portion 56a of the glass plate 11 in synchronization with the cutting device 55.

After the grinding device 118 is located outward in the width direction (grinding processing start position) of the first corner of the main body portion 56a of the glass plate 11, the controller transmits a stop signal (OFF signal) to the control unit of the first servomotor 34 and transmits a drive signal (ON signal) to the control unit of the fourteenth servomotor 120. The control unit of the first servomotor 34 that has received the stop signal stops the first servomotor 34, and the control unit of the fourteenth servomotor 120 that has received the drive signal drives the fourteenth servomotor 120.

The rotation of the axis of the fourteenth servomotor 120 causes the slide block 63b to move the feed screw 60b in the width direction from the other side edge 48b of the grinding processing area 22 toward the one side edge 48a, so that the grinding processing table 117 moves in the width direction from the side of the other side edge 48b of the grinding processing area 22 toward the one side edge 48a, and the grinding wheel 127 of the grinding device 118 is located at the first corner of the main body portion 56a of the glass plate 11. The first corner of the main body portion 56a of the glass plate 11 enters the slit 131 of the cover 129 of the grinding jig 121.

After the grinding wheel 127 of the grinding device 118 is positioned at the first corner of the glass plate 11, the controller transmits a drive signal (ON signal) and an NC control signal to the control unit of the fifteenth to seventeenth servomotors 122 to 124 of the grinding device 118, transmits a reverse signal (ON signal) and an NC control signal to the control unit of the first servomotor 34, and transmits an NC control signal to the control unit of the fourteenth servomotor 120. The spindle motor 130 is constantly driven before the glass plate 11 is placed on the grinding processing table 117. The control unit of the fifteenth to seventeenth servomotors 122 to 124 and the control unit of the spindle motor 130, the control unit of the first servomotor 34, and the control unit of the fourteenth servomotor 120 that have received the drive signal and the NC control signal drive the fifteenth to seventeenth servomotors 122 to 124, the spindle motor 130, the first servomotor 34, and the fourteenth servomotor 120, perform the contour control movement by NC control on the vicinity of one side edge (one side edge) of the main body portion 56a of the glass plate 11, and the grinding wheel 127 performs grinding processing (grinding processing means) on the vicinity of one side edge of the main body portion 56a of the glass plate 11.

The control unit of the first servomotor 34 that has received the reverse signal (ON signal) drives the first servomotor 34 during the grinding processing (during cutting processing) to move the grinding device 118 backward in the front-rear direction in the grinding processing area 22, and the control unit of the fourteenth servomotor 120 drives the fourteenth servomotor 120 during the grinding processing (during cutting processing) to reciprocate the grinding device 118 in the width direction in the grinding processing area 22. The grinding wheel 127 of the grinding device 118 moves from the first corner toward the second corner of the glass plate 11 while grinding the vicinity of one side edge (one side edge) of the main body portion 56a of the glass plate 11 along the edge (outline cutting line K1) of the main body portion 56a of the glass plate 11.

After the grinding processing of the vicinity of one side edge (one side edge) of the main body portion 56a of the glass plate 11 is completed by the grinding wheel 127 of the grinding device 118 and the grinding wheel 127 is positioned at the second corner of the main body portion 56a of the glass plate 11, the grinding processing table 117 moves in the width direction from the side of one side edge 48a of the grinding processing area 22 toward the side of the other side edge 48b, and the grinding wheel 127 performs the grinding processing of the vicinity of the rear end edge (rear end edge portion) of the main body portion 56a of the glass plate 11 with the movement of the grinding processing table 117 in the width direction (grinding processing means).

By driving of the fourteenth servomotor 120 and the first servomotor 34 during the grinding processing (during cutting processing), the grinding wheel 127 of the grinding device 118 sequentially moves toward the second corner 18b→third corner 18c→fourth corner 18d→first corner 18a of the main body portion 56a of the glass plate 11 while the grinding wheel 127 grinds the main body portion 56a of the glass plate 11 along the edge (outline cutting line K1) of the main body portion 56a of the glass plate 11. When the grinding processing of the main body portion 56a of the glass plate 11 by the grinding wheel 127 is completed, the grinding device 118 moves outward in the width direction (grinding processing start position) of the first corner (front end edge) of the main body portion 56a of the glass plate 11 and stands by.

After the grinding processing of the main body portion 56a of the glass plate 11 is completed, the main body portion 56a of the glass plate 11 after the grinding processing is conveyed from the grinding processing area 22 to the unloading area 23 by the glass plate fourth holder 40d. In the unloading area 23, the main body portion 56a of the glass plate 11 subjected to the cutting processing, the bend-breaking processing, and the grinding processing is moved forward from the rear end portion toward the front end portion of the unloading area 23 by the unloading conveyor 134, and the main body portion 56a of the glass plate 11 subjected to each processing is unloaded from the unloading area 23.

When the main body portion 56a of the glass plate 11 subjected to each processing is located on the unloading conveyor 134 in the unloading area 23, the main body portion 56a of the glass plate 11 subjected to the grinding processing is located on the grinding processing table 117 in the grinding processing area 22, the main body portion 56a of the glass plate 11 subjected to the bend-breaking processing is located on the bend-breaking processing table 74 in the bend-breaking processing area 21, the glass plate 11 subjected to the cutting processing is located on the cutting processing table 54 in the cutting processing area 20, and the unprocessed glass plate 11 subjected to the positioning by the first positioning means and the second positioning means is located on the loading conveyor 43 in the loading area 19. As described above, in the glass plate processing system 10, the plurality of glass plates 11 are sequentially conveyed from the loading area 19 toward the unloading area 23, and the processing of the plurality of glass plates 11 is continuously performed.

The first and second bend-breaking devices 75a and 75b (bend-breaking device 75) move the first and second bend-breaking jigs 84a and 84b (bend-breaking jigs) from the scoring line forming start point in the vicinity of the outer side of the outline cutting line K1 toward the outer peripheral edge 56c of the glass plate 11, form the scoring line K2 extending in the predetermined direction at the scoring line forming location of the peripheral area 56b of the glass plate 11, and move the bend-breaking cutter wheel 93 to the rolling direction second change start point 135c in the vicinity of the inner side of the outer peripheral edge 56c of the glass plate 11, the first and second bend-breaking jigs 84a and 84b (bend-breaking jigs) are caused to travel in parallel with the upper surface 12 of the peripheral area 56b of the glass plate 11 in the planned direction in which the scoring line K2 that forms the upper surface 12 on the next (second to n-th) will extend, and the bend-breaking cutter wheel 93 that comes into contact with the upper surface 12 of the peripheral area 56b of the glass plate 11 is caused to rotate in the circumferential direction with respect to the cutter holder center axis O2, and while the rolling (moving) direction of the peripheral edge 101 of the bend-breaking cutter wheel 93 is changed to the planned direction in which the scoring line K2 that forms the next (second to n-th) will extend, the scoring line K2 that extends in the planned direction is formed in the vicinity of the inner side of the outer peripheral edge 56c of the glass plate 11, the rolling direction of the peripheral edge 101 of the bend-breaking cutter wheel 93 in which the cutter wheel axis O3 is eccentric radially outward with respect to the cutter holder center axis O2 of the bend-breaking cutter holder 92 can be changed to the planned direction in which the scoring line K2 to be formed next (second to n-th) will extend between the second change start point 135c in the rolling direction and the outer peripheral edge 56c of the glass plate 11. At the same time as the formation of the scoring line K2 in the bend-breaking processing, the rolling direction of the peripheral edge 101 of the bend-breaking cutter wheel 93 can be changed to the planned direction in which the scoring line K2 to be formed next (second to n-th) will extend in the peripheral area 56b of the glass plate 11, in a series of operations of forming the scoring lines in the peripheral area 56b of the glass plate 11, the rolling direction of the peripheral edge 101 of the bend-breaking cutter wheel 93 can be reliably changed to the planned direction in which the scoring line K2 to be formed next (second to n-th) will extend.

The first and second bend-breaking devices 75a and 75b (bend-breaking device 75) do not need to use a θ-axis servomotor or a transmission member (such as pulley or belt) that transmits a rotational force of an axis of the θ-axis servomotor to the bend-breaking cutter holder 92, and can achieve size reduction, energy saving, and cost reduction of the first and second bend-breaking devices 75a and 75b (bend-breaking device 75). In the bend-breaking process, it is not necessary to rotate the axis of the θ-axis servomotor to make the rolling direction of the peripheral edge 101 of the bend-breaking cutter wheel 93 the same as the extending direction of the virtual scoring line of the peripheral area 56b of the glass plate 11, and it is not necessary to change the rolling direction of the peripheral edge 101 of the bend-breaking cutter wheel 93 using the θ-axis servomotor every time the scoring line K2 is formed. Therefore, time reduction and efficiency of the bend-breaking processing can be achieved.

### Reference Signs List

10 Glass plate processing system
11 Glass plate
12 Upper surface
13 Lower surface
14 First side edge (one side edge)
15 Second side edge (other side edge)
16 Front end edge
17 Rear end edge
18a to 18d First to fourth corners
19 Loading area
20 Cutting processing area
21 Bend-breaking processing area
22 Grinding processing area
23 Unloading area
24 Conveyance mechanism
25 Machine table
26a, 26b First and second pillars
27 Fixed frame
28 First moving unit
29 Second moving unit
30 First guide frame
31 First guide rail
32 First traveling frame
33 First guide shoe
34 First servomotor
35 Second guide frame
36 Second guide rail
37 Second traveling frame
38 Second guide shoe
39 Second servomotor
40a to 40d Glass plate first to fourth holders
41 Pad mounting plate
42 Suction pad
43 Loading conveyor
44 Stopper
45 Roller
45a Roller
46 Roller lifting mechanism
47 Moving mechanism
48a First side edge (one side edge)
48b Second side edge (other side edge)
49 Shaft
50 Rod
51 Third servomotor
52 Moving arm
53 Contact member
54 Cutting processing table
55 Cutting device
56a Main body portion
56b Peripheral area
56c Outer peripheral edge
57a, 57b Base lane
58a First moving mechanism
58b Second moving mechanism
59a, 59b Traveling guide rail
60a, 60b Feed screw
61 Fourth servomotor
62a, 62b Guide shoe
63a, 63b Slide block (housing nut)
64 Cutting jig
65 Air cylinder
66 Fifth servomotor
67 Cutting cutter wheel
68 Cutting cutter holder
69 Cutter lifting shaft
70 Cutter lifting guide
71 Support shaft
72 Bracket
73 Timing belt
74 Bend-breaking processing table
75 Bend-breaking device
75a First bend-breaking device
75b Second bend-breaking device
76a First support device
76b Second support device
77 Belt conveyor
78 Conveyor drive motor
79 Belt
80 Pulley
81 Carrier roller
82 Conveyor frame
83 Suspension frame
84a First bend-breaking jig
84b Second bend-breaking jig
85 Sixth servomotor (X-axis servomotor)
86a X-axis first actuator
86b X-axis second actuator
87 Seventh servomotor (Y-axis servomotor)
88a Y-axis first actuator
88b Y-axis second actuator
89a X-axis first actuator frame
89b X-axis second actuator frame
89c Y-axis first actuator frame
89d Y-axis second actuator frame
90 Eighth servomotor (X-axis servomotor)
91 Ninth servomotor (Y-axis servomotor)
92 Bend-breaking cutter holder
93 Bend-breaking cutter wheel
94 Holder lifting mechanism
95a First pressing member
95b Second pressing member
96a First pressing member lifting mechanism (second lifting mechanism)
96b Second pressing member lifting mechanism (second lifting mechanism)
97 Holder main body
98 Holder head
99 Bearing
100 Rotation shaft
101 Peripheral edge
102 Connecting portion
103 Bracket
104a First pressing surface
104b Second pressing surface
105 Through hole
106 Guide frame
107a First support member
107b Second support member
108 Second support member lifting mechanism (fourth lifting mechanism)
109 Tenth servomotor (X-axis servomotor)
110a X-axis third actuator
110b X-axis fourth actuator
111 Eleventh servomotor (Y-axis servomotor)
112a Y-axis third actuator
112b Y-axis fourth actuator
113a X-axis third actuator frame
113b X-axis fourth actuator frame
113c Y-axis third actuator frame
113d Y-axis fourth actuator frame
114 Twelfth servomotor
115 Thirteenth servomotor
116a First support surface
116b Second support surface
117 Grinding processing table
118 Grinding device
119 Suction pad
120 Fourteenth servomotor
121 Grinding jig
122 Fifteenth servomotor
123 Sixteenth servomotor
124 Seventeenth servomotor
125 Grinding wheel lifting screw
126 Grinding wheel cutting screw
127 Grinding wheel
128 Grinding holder
129 Cover
130 Spindle motor
131 Slit
132 Motor housing
133 Bracket
134 Unloading conveyor
135a Scoring line forming start point
135b Rolling direction first change start point
135c Rolling direction second change start point
K1 Outline cutting line (cut line)
K2 Virtual scoring line
L1 Positioning first reference (virtual positioning first reference line)
L2 Positioning second reference (virtual positioning second reference line) (center line)
O1 Front-rear direction center of side edge
O2 Cutter holder center axis
O3 Cutter wheel axis
S Separation dimension (eccentric dimension)

## Claims

1. A bend-breaking device using a bend-breaking jig including a bend-breaking cutter wheel that forms a scoring line on a glass plate to be processed and a bend-breaking cutter holder that supports the bend-breaking cutter wheel, forming an outline cutting line on the glass plate, then forming a scoring line in a peripheral area of the glass plate extending outside the outline cutting line by the bend-breaking jig, and bend-breaking the peripheral area of the glass plate on which the scoring line is formed, wherein
a cutter wheel axis extending in a vertical direction of the bend-breaking cutter wheel is eccentric radially outward with respect to a cutter holder center axis extending in the vertical direction of the bend-breaking cutter holder, the bend-breaking cutter wheel is rotatable by 360° in a direction around the cutter holder center axis with respect to the bend-breaking cutter holder, and the bend-breaking device comprises: a scoring line forming means that moves the bend-breaking jig from a scoring line forming start point in the vicinity of an outer side of the outline cutting line toward an outer peripheral edge of the glass plate, and forms the scoring line extending in a predetermined direction at a scoring line forming location in the peripheral area of the glass plate; and a rolling direction first changing means that, after the bend-breaking cutter wheel moves to a rolling direction change point in the vicinity of an inner side of the outer peripheral edge of the glass plate, causes the bend-breaking jig to travel, in parallel with an upper surface of the peripheral area of the glass plate, on the upper surface in a planned direction in which a scoring line to be formed next will extend and causes the bend-breaking cutter wheel in contact with the upper surface of the peripheral area of the glass plate to rotate in a direction around the cutter holder center axis to change a rolling direction of the bend-breaking cutter wheel to the planned direction in which the scoring line to be formed next will extend, and forms a scoring line extending in the planned direction at the scoring line forming location in the peripheral area of the glass plate.

2. The bend-breaking device according to claim 1, further comprising a rolling direction second changing means that, in a case where an initial scoring line is formed in the peripheral area of the glass plate, causes the bend-breaking jig to travel slightly from the scoring line forming start point or a vicinity of the scoring line forming start point in parallel with the upper surface of the peripheral area of the glass plate, on the upper surface in a planned direction in which the initially formed scoring line will extend, rotates the bend-breaking cutter wheel in contact with the upper surface of the glass plate in a direction around the cutter holder center axis, and changes the rolling direction of the bend-breaking cutter wheel to the planned direction in which the initially formed scoring line will extend.

3. The bend-breaking device according to claim 2, further comprising: a first lifting mechanism that lifts and lowers the bend-breaking cutter holder in a vertical direction; and a holder first lowering means that lowers the bend-breaking cutter holder toward the upper surface of the glass plate and toward the scoring line forming start point by the first lifting mechanism when forming a next scoring line with respect to the peripheral area of the glass plate, wherein the scoring line forming means lowers the bend-breaking cutter holder toward the upper surface of the peripheral area of the glass plate by the holder first lowering means to bring the bend-breaking cutter wheel into contact with the upper surface of the glass plate, and then causes the bend-breaking jig to travel from the scoring line forming start point toward the rolling direction change point, so that the bend-breaking cutter wheel forms a scoring line extending in the planned direction at a scoring line forming location in the peripheral area of the glass plate.

4. The bend-breaking device according to claim 3, further comprising a holder second lowering means that lowers the bend-breaking cutter holder toward the upper surface of the glass plate and toward the scoring line forming start point or the vicinity of the scoring line forming start point by the first lifting mechanism at the time of forming the initial scoring line with respect to the peripheral area of the glass plate, wherein the rolling direction second changing means lowers the bend-breaking cutter holder toward the upper surface of the glass plate by the holder second lowering means to bring the bend-breaking cutter wheel into contact with the upper surface of the glass plate, and then causes the bend-breaking jig to travel slightly at the scoring line forming start point or the vicinity of the scoring line forming start point to change the rolling direction of the bend-breaking cutter wheel to a planned direction in which the initially formed scoring line will extend.

5. The bend-breaking device according to claim 4, further comprising: a holder lifting means that lifts the bend-breaking cutter holder from the upper surface of the glass plate by the first lifting mechanism after forming the scoring line at a scoring line forming location in the peripheral area of the glass plate; and a jig moving means that moves the bend-breaking jig to a next scoring line forming location in the peripheral area of the glass plate after lifting the bend-breaking cutter holder by the holder lifting means, wherein the holder first lowering means moves the bend-breaking jig to the next scoring line forming location by the jig moving means, and then lowers the bend-breaking cutter holder toward the upper surface of the peripheral area of the glass plate and toward the scoring line forming start point by the first lifting mechanism at the next scoring line forming location, the scoring line forming means causes the bend-breaking jig to travel in the planned direction from the scoring line forming start point toward the rolling direction change point at the next scoring line forming location to form a scoring line extending in the planned direction in the peripheral area of the glass plate, and at the rolling direction change point at the next scoring line forming location, the rolling direction first changing means causes the bend-breaking jig to travel, in parallel with the upper surface of the peripheral area of the glass plate, on the upper surface in a planned direction in which a scoring line to be formed next will extend and causes the bend-breaking cutter wheel in contact with the upper surface of the peripheral area of the glass plate to rotate in a direction around the cutter holder center axis to change the rolling direction of the bend-breaking cutter wheel to the planned direction in which the scoring line to be formed next will extend, and forms a scoring line extending in the planned direction from the vicinity of the inner side of the outer peripheral edge of the glass plate toward the outer peripheral edge.

6. The bend-breaking device according to claim 5, wherein the rolling direction second changing means causes the bend-breaking jig to draw a circular trajectory toward the rolling direction change point at the scoring line forming start point, or causes the bend-breaking jig to draw a circular trajectory from a vicinity of the scoring line forming start point toward the scoring line forming start point, so that the rolling direction of the bend-breaking cutter wheel changes to a planned direction in which the initially formed scoring line will extend.

7. The bend-breaking device according to claim 5, wherein the rolling direction second changing means causes the bend-breaking jig to linearly travel from a vicinity of the scoring line forming start point toward the scoring line forming start point on the upper surface of the peripheral area of the glass plate at the scoring line forming location so that an angle formed by a planned direction in which the initially formed scoring line in the peripheral area of the glass plate will extend and a traveling direction of the bend-breaking jig toward the scoring line forming start point is 90° or less, changes the rolling direction of the bend-breaking cutter wheel to the traveling direction of the bend-breaking jig, and then changes the traveling direction of the bend-breaking jig to the planned direction in which the initially formed scoring line at the scoring line forming start point will extend at the angle of 90° or less, and changes the rolling direction of the bend-breaking cutter wheel to the planned direction in which the initially formed scoring line will extend.

8. The bend-breaking device according to claim 5, wherein the rolling direction second changing means causes the bend-breaking jig to travel from a vicinity of the scoring line forming start point toward the scoring line forming start point along a planned direction in which the initially formed scoring line in the peripheral area of the glass plate at the scoring line forming location will extend, or causes the bend-breaking jig to travel on the initially formed virtual scoring line in the peripheral area of the glass plate at the scoring line forming location from a vicinity of the scoring line forming start point toward the scoring line forming start point, and reverses the bend-breaking jig at the scoring line forming start point to change a traveling direction of the bend-breaking jig to the planned direction in which the initially formed scoring line will extend, and changes the rolling direction of the bend-breaking cutter wheel to the planned direction in which the initially formed scoring line will extend.

9. The bend-breaking device according to any one of claims 1 to 8, wherein the bend-breaking jig includes a pressing member that presses the peripheral area of the glass plate on which the scoring line is formed, and a second lifting mechanism that lifts and lowers the pressing member, and the bend-breaking device further comprises a press-bend-breaking means that, after the scoring line is formed at a scoring line forming location in the peripheral area of the glass plate by the bend-breaking cutter wheel, lowers the pressing member toward the peripheral area of the glass plate by the second lifting mechanism, and bend-breaks the peripheral area of the glass plate from a main body of the glass plate by pressing the peripheral area of the glass plate downward by the pressing member.
